# EUROPEAN PATENT APPLICATION

(11) **EP 4 571 910 A1**
(43) Date of publication of application: **18.06.2025**
(21) Application number: 23892791.7
(22) Date of filing: 18.12.2023
(51) Int. Cl.: H01M 10/04, B25B 11/00, H01M 50/262, H01M 50/258, H01M 50/244, B23P 19/06

(54) **BATTERY PACK FASTENING SYSTEM AND USE METHOD THEREFOR, AND BATTERY PACK PRODUCTION METHOD**

(30) Priority: 12.10.2023 CN 202311318987
(71) Applicant: Contemporary Amperex Technology (Hong Kong) Limited, Central, Central And Western District (HK)
(72) Inventor: WU, Kai, Ningde Fujian 352100 (CN); SUN, Zhiqiang, Ningde Fujian 352100 (CN); SUN, Yanlin, Ningde Fujian 352100 (CN); CHEN, Fanke, Ningde Fujian 352100 (CN); GONG, Xueqing, Ningde Fujian 352100 (CN); XIE, Yuming, Ningde Fujian 352100 (CN); XIA, Yijun, Ningde Fujian 352100 (CN)
(74) Representative: Gong, Jinping
(86) International application number: PCT/CN2023/139548
(87) International publication number: WO 2025/076999

(57) **Abstract**

The present disclosure relates to the technical field of battery manufacturing, and discloses a battery pack fastening system and a method for using same, and a battery pack production method. The battery pack fastening system includes an operating platform, a fastening assembly, a driving assembly and a control module. The operating platform includes a lifting mechanism and a tray. The tray is provided with an accommodating portion in which the battery pack is placed, and an operating space is formed above the operating platform. The fastening assembly includes a fastening component, a marking component and an image capture component. The fastening component is configured to fasten the fastener, the marking component is configured to mark the fastener, and the image capture component is configured to obtain an image of the fastener. The fastening assembly is mounted to a free end of the driving assembly, and the driving assembly is configured to drive the fastening assembly to move. The driving assembly and the image capture component are both electrically coupled to the control module, and the control module can form a visual guide for the movement of the driving assembly based on the image, so as to move the fastening assembly to a position corresponding to the fastener to complete fastening and marking of the fastener.

## Description

### Cross-Reference to Related Application

The present disclosure is filed based on and claims priority to Chinese Patent Application No. 202311318987.7, entitled "BATTERY PACK FASTENING SYSTEM AND METHOD FOR USING SAME, AND BATTERY PACK PRODUCTION METHOD" and filed on October 12, 2023, which is incorporated herein by reference in its entirety.

### Technical Field

The present disclosure relates to the technical field of batteries, and more particularly to a battery pack fastening system and a method for using same, and a battery pack production method.

### Background

New energy batteries are increasingly used in life and industry. For example, new energy vehicles equipped with batteries have been widely used. In addition, batteries are increasingly used in the field of energy storage, etc.

Fasteners are provided in a battery pack to fasten different parts and components in the battery pack together. Moreover, with the development of battery pack production technology, there are also devices for automatically fastening the fasteners.

However, in the related art, the devices for automatically fastening the fasteners are not flexible enough and have many usage restrictions.

### Summary of the Invention

In view of this, the present disclosure provides a battery pack fastening system and a method for using same, and a battery pack production method.

The present disclosure is implemented through the following technical solutions.

A first aspect of the present disclosure provides a battery pack fastening system for fastening a fastener between a box and an upper cover of a battery pack. The battery pack fastening system includes an operating platform, a fastening assembly, a driving assembly and a control module. Specifically, the operating platform includes a lifting mechanism and a tray. The tray is placed on the lifting mechanism, the tray is provided with an accommodating portion in which the battery pack is placed, and an operating space is formed above the operating platform. The fastening assembly includes a fastening component, a marking component and an image capture component. The fastening component is configured to fasten the fastener, the marking component is configured to mark the fastener, and the image capture component is configured to obtain an image of the fastener. The fastening assembly is mounted to a free end of the driving assembly, and the driving assembly is configured to drive the fastening assembly to move to any position within the operating space. The driving assembly and the image capture component are both electrically coupled to the control module, and the control module can form a visual guide for the movement of the driving assembly based on the image, so as to move the fastening assembly to a position corresponding to the fastener to complete fastening and marking of the fastener.

In the battery pack fastening system provided in the embodiment of the present disclosure, the control module can process the image of the fastener obtained by the image capture component, and thus can determine the position of the fastener. On this basis, the control module can form a visual guide for the movement of the fastening assembly driven by the driving assembly, so that the control module can control the driving assembly to drive the fastening component to move to the position corresponding to the corresponding fastener, the fastening component can then be docked with the corresponding fastener, and the fastening component can thus be used to complete fastening of the corresponding fastener. Further, it is also possible for the control module to control the driving assembly to drive the marking component to move to a position corresponding to the corresponding fastener. On this basis, the marking component can be brought into contact with the corresponding fastener, and the marking component can thus be used to complete marking of the corresponding fastener. Moreover, in the embodiment of the present disclosure, the control module controls the movement of the driving assembly or the fastening assembly based on the visual guide formed by the image obtained by the image capture component for the movement of the driving assembly or the fastening assembly. For different battery packs of different models and specifications, as well as fasteners at different positions of the battery pack, a good adaptation can be formed. Therefore, the battery pack fastening system provided in the embodiment of the present disclosure can be applied to the production of battery packs of different models and specifications.

In a possible embodiment of the present disclosure, the fastening assembly includes a connecting bracket fixedly connected to the free end of the driving assembly, the fastening component and the marking component are mounted in an arrangement manner on the connecting bracket, and the image capture component is mounted on the connecting bracket.

In a possible embodiment of the present disclosure, there are at least two fastening components arranged in an arrangement manner on the connecting bracket, and there are at least two image capture components arranged on the connecting bracket in an arrangement manner of one-to-one correspondence with the fastening components.

In a possible embodiment of the present disclosure, the fastening component includes a fixed fastening component and a movable fastening component, there is one fixed fastening component fixedly connected to the connecting bracket, and the movable fastening component has an adjustable position relative to the connecting bracket; and the marking component is fixedly connected to the connecting bracket close to the fixed fastening component.

In a possible embodiment of the present disclosure, the fastening assembly further includes a first driving member arranged between the connecting bracket and the movable fastening component, and the first driving member is configured to drive the movable fastening component to move relative to the connecting bracket; and the first driving member is electrically coupled to the control module, and the control module is capable of controlling the first driving member to drive the movement of the movable fastening component based on the image.

In a possible embodiment of the present disclosure, the image capture component and the movable fastening component are respectively arranged on two sides of the fixed fastening component; and the image capture component corresponding to the fixed fastening component is arranged between the marking component and the fixed fastening component.

In a possible embodiment of the present disclosure, the image capture component includes a supplementary lighting member and an image capture member, an orientation of a light source of the supplementary lighting member is the same as an orientation of a lens of the image capture member, and the supplementary lighting member is configured to provide supplementary lighting to the fastener captured by the image capture member; and the image capture member is electrically coupled to the control module, and the control module is configured to obtain and process the image captured by the image capture member.

In a possible embodiment manner of the present disclosure, the supplementary lighting member is an annular light source arranged between the image capture member and the fastener, and the lens of the image capture member is located on an axis of the annular light source.

In a possible embodiment of the present disclosure, the marking component includes a marking tool and a second driving member, the second driving member is arranged between the marking tool and the connecting bracket, and is configured to drive the marking tool to move relative to the connecting bracket; and the second driving member is electrically coupled to the control module, and the control module is capable of controlling the second driving member to drive the movement of the marking tool based on the image.

In a possible embodiment of the present disclosure, the marking tool includes a marking pen and a pen cap, wherein the marking pen is provided with a marking portion at one end away from the driving assembly, the marking portion is configured to draw a marking line on the fastener, and the pen cap detachably covers the marking portion.

In a possible embodiment of the present disclosure, the battery pack fastening system further includes a clamping assembly, wherein the clamping assembly remains fixed relative to the operating platform; and the clamping assembly includes at least two clamping members capable of moving closer to or away from each other to clamp or release the pen cap.

In a possible embodiment of the present disclosure, the clamping assembly further includes a third driving member configured to drive the clamping members to move closer to or away from each other; the third driving member is electrically coupled to the control module, and when the marking pen needs to draw a marking line on the fastener, the control module controls the marking pen to drive the pen cap to move to between the clamping members, and controls the clamping members to clamp the pen cap so as to disengage the marking pen from the pen cap; and when the marking pen completes the drawing of a marking line on the fastener, the control module controls the marking pen to be sleeved inside the pen cap, and controls the clamping members to release the pen cap.

In a possible embodiment of the present disclosure, a plurality of magnets are provided circumferentially on contacting surfaces of the pen cap and the marking pen, and the pen cap is magnetically connected to the marking pen by means of the magnets.

In a possible embodiment manner of the present disclosure, the clamping members are provided with guide slopes configured to guide the movement of the pen cap to between the clamping members.

In a possible embodiment of the present disclosure, the clamping assembly further includes a pen cap detection sensor configured to detect whether the pen cap is located between the clamping members; and the pen cap detection sensor is electrically coupled to the control module, and a prerequisite for the control module to control the marking pen to draw a marking line on the fastener includes that the pen cap detection sensor detects that the marking pen is located between the clamping members.

In a possible embodiment of the present disclosure, the fastening component includes a fastening tool and a fourth driving member, the fourth driving member is arranged between the fastening tool and the connecting bracket, and is configured to drive the fastening tool to move relative to the connecting bracket; and the fourth driving member is electrically coupled to the control module, and the control module is capable of controlling the fourth driving member to drive the movement of the fastening tool based on the image.

In a possible embodiment of the present disclosure, the lifting mechanism includes a base, a raising member and a fifth driving member, wherein the fifth driving member is arranged between the base and the raising member, and is configured to drive the raising member to move in a vertical direction, such that the raising member raises the tray; and the fifth driving member is electrically coupled to the control module, and the control module is capable of controlling the fifth driving member to drive the movement of the raising member.

In a possible embodiment of the present disclosure, there are two lifting mechanisms arranged opposite to each other, there is a gap between the lifting mechanisms, and the gap forms a transport path for the battery pack to be transported by a transport cart and the tray; a blocking component is provided on the base, and includes a blocking member and a sixth driving member, and the sixth driving member is configured to drive the blocking member to move to the transport path, so as to limit the transport cart between the lifting mechanisms; and the sixth driving member is electrically coupled to the control module, and the control module is capable of controlling the blocking component to limit or release the limit on the transport cart.

In a possible embodiment of the present disclosure, the lifting mechanism further includes a locking component, the locking component includes a locking member and a seventh driving member, and the seventh driving member is capable of driving the locking member to move in the vertical direction to extend into a locking hole provided in the tray, so as to lock the tray between the lifting mechanisms; and the seventh driving member is electrically coupled to the control module, and the control module is capable of controlling the seventh driving member to drive the movement of the locking member.

A second aspect of the present disclosure provides a method for using a battery pack fastening system, the battery pack fastening system being configured to fasten a fastener between a box and an upper cover of a battery pack and including an operating platform, a fastening component, a marking component and an image capture component, the method including: a placing step of placing the battery pack to be fastened on the operating platform; a fastening alignment step of causing the image capture component to obtain an image of the operating platform, using the image to form a visual guide for the movement of the fastening component, and moving the fastening component to a position docked with the fastener based on the visual guide; a fastening step of causing the fastening component to fasten the fastener; a marking alignment step of causing the image capture component to obtain an image of the operating platform, using the image to form a visual guide for the movement of the marking component, and moving the marking component to a position docked with the fastener based on the visual guide; and a marking step of causing the marking component to mark the fastener.

The method for using a battery pack fastening system in the embodiment of the present disclosure is configured to use the battery pack fastening system provided in the first aspect, and therefore has the same technical effects.

In a possible embodiment of the present disclosure, the fastening component is fixed relative to the marking component, and the fastening component and the marking component are driven to move synchronously by a driving assembly; moving the fastening component to a position docked with the fastener in the fastening alignment step includes: moving the driving assembly to drive the fastening component to move to a position docked with the fastener; and moving the marking component to a position docked with the fastener in the marking alignment step correspondingly includes: moving the driving assembly to drive the marking component to move to a position docked with the fastener.

In a possible embodiment of the present disclosure, the marking component includes a marking tool and a second driving member; and the marking alignment step includes: causing the image capture component to obtain an image of the operating platform, using the image to form a visual guide for the movement of the marking component, and moving the marking component to a position aligned with the fastener based on the visual guide; and causing the second driving member to drive the marking tool to move to a position docked with the fastener.

In a possible embodiment of the present disclosure, the fastening component includes a fastening tool and a fourth driving member; and the fastening alignment step includes: causing the image capture component to obtain an image of the operating platform, using the image to form a visual guide for the movement of the fastening component, and moving the fastening component to a position aligned with the fastener based on the visual guide; and causing the fourth driving member to drive the fastening tool to move to a position docked with the fastener.

In a possible embodiment of the present disclosure, the marking tool includes a marking pen and a pen cap, and the battery pack fastening system further includes a clamping assembly; and before the marking alignment step, the method further includes: a pen cap disengagement step of moving the marking component to the clamping assembly, causing the clamping assembly to clamp the pen cap, and causing the driving assembly to drive the marking pen to move away from the pen cap, so as to disengage the marking pen from the pen cap.

In a possible embodiment of the present disclosure, after the marking step, the method further includes: a pen cap engagement step of causing the driving assembly to drive the marking pen to move to the pen cap clamped by the clamping assembly, and causing the driving assembly to drive the marking pen to be inserted into the pen cap; and a pen cap release step of causing the clamping assembly to release the pen cap.

In a possible embodiment of the present disclosure, a transport cart is used to transport a tray and the battery pack, the operating platform includes two lifting mechanisms arranged opposite to each other, and blocking components are provided in the lifting mechanisms; and the placing step includes: a limiting step of causing the transport cart that transports the tray and the battery pack to move into a gap between the two lifting mechanisms, such that the blocking components limit the transport cart between the lifting mechanisms; and a raising step of causing the lifting mechanisms to raise the tray and the battery pack.

In a possible embodiment of the present disclosure, locking components are provided in the lifting mechanisms, and before the raising step, the method further includes: a locking step of extending locking members of the locking components into locking holes of the tray.

A third aspect of the present disclosure provides a battery pack production method, in which a battery pack fastening system provided in any embodiment in the first aspect is used for fastening and marking a fastener in a battery pack, the production method including: a production step of producing a box and an upper cover of the battery pack; an assembly step of placing the box and the upper cover together according to an assembly relationship; and a fastening step of using the battery pack fastening system to complete fastening of fasteners between the box and the upper cover.

In a possible embodiment of the present disclosure, the fastening step includes: an initial fastening step of using the battery pack fastening system to initially fasten the fasteners; and where there is a fastener whose initial fastening result is unqualified in the initial fastening step, the fastening step further includes: a marking line drawing step of using the battery pack fastening system to draw a marking line on the fastener whose initial fastening result is unqualified; and a final fastening step of using the battery pack fastening system to re-fasten the fastener on which a marking line is drawn.

In a possible embodiment of the present disclosure, after the fastening step, the battery pack production method further includes: recording final fastening results of the fasteners; transporting the battery pack with all the fasteners having qualified fastening results to the next production process station; and transporting the battery pack with not all the fasteners having qualified fastening results to a re-inspection station.

The battery pack production method provided by the present disclosure uses the battery pack fastening system provided in the first aspect to fasten and mark the fasteners in the battery pack, and therefore has the same technical effects.

### Description of Drawings

By reading the detailed description of the preferred embodiments below, various other advantages and benefits will become apparent to those of ordinary skill in the art. The drawings are for the purpose of illustrating the preferred embodiments only and are not to be considered a limitation to the present disclosure. Moreover, in all of the drawings, the same components are indicated by the same reference numerals. In the drawings:
Fig. 1 is a schematic diagram of an overall structure of a battery pack fastening system provided in some embodiments of the present disclosure (with a tray hidden);
Fig. 2 is a schematic structural diagram of a fastening assembly of a battery pack fastening system provided in some embodiments of the present disclosure from a first perspective;
Fig. 3 is a schematic structural diagram of a fastening assembly of a battery pack fastening system provided in some embodiments of the present disclosure from a second perspective;
Fig. 4 is a schematic structural diagram of a marking component of a battery pack fastening system provided in some embodiments of the present disclosure;
Fig. 5 is a schematic structural diagram of a fastening component of a battery pack fastening system provided in some embodiments of the present disclosure;
Fig. 6 is a schematic diagram of the installation of a clamping component of a battery pack fastening system provided in some embodiments of the present disclosure;
Fig. 7 is an enlarged schematic diagram of a clamping component of a battery pack fastening system provided in some embodiments of the present disclosure;
Fig. 8 is a schematic structural diagram of an operating platform of a battery pack fastening system provided in some embodiments of the present disclosure (with a tray hidden);
Fig. 9 is a schematic diagram of the arrangement of a blocking component and a locking component of a battery pack fastening system provided in some embodiments of the present disclosure;
Fig. 10 is a schematic diagram of the arrangement of a lifting mechanism of a battery pack fastening system provided in some embodiments of the present disclosure;
Fig. 11 is a schematic diagram of an overall structure of a battery pack fastening system provided in some embodiments of the present disclosure;
Fig. 12 is a flowchart of the implementation of a method for using a battery pack fastening system provided in some embodiments of the present disclosure;
Fig. 13 is a flowchart of the implementation of a marking alignment step in a method for using a battery pack fastening system provided in some embodiments of the present disclosure;
Fig. 14 is a flowchart of the implementation of a fastening alignment step in a method for using a battery pack fastening system provided in some embodiments of the present disclosure;
Fig. 15 is a flowchart of the implementation of a battery pack production method provided in some embodiments of the present disclosure; and
Fig. 16 is a flowchart of the implementation of a fastening step in a battery pack production method provided in some embodiments of the present disclosure.

### Description of reference numerals

01 - magnet; 1 - battery pack fastening system; 11 - operating platform; 111 - lifting mechanism; 1111 - base; 1112 - raising member; 11121 - guide wheel; 1113 - fifth driving member; 11131 - elevation slope ; 112 - blocking component; 1121 - blocking member; 1122 - sixth driving member; 113 - locking component; 1131 - locking member; 1132 - seventh driving member; 114 - tray; 12 - fastening assembly; 121 - fastening component; 121a - fixed fastening component; 121b - movable fastening component; 1211 - fastening tool; 1212 - fourth driving member; 122 - marking component; 1221 - marking tool; 12211 - marking pen; 12212 - pen cap; 1222 - second driving member; 123 - connecting bracket; 124 - first driving member; 125 - image capture component; 1251 - supplementary lighting member; 1252 - image capture member; 13 - driving assembly; 131 - six-axis robot; 14 - clamping assembly; 141 - clamping member; 1411 - guide slope; 142 - third driving member; 143 - pen cap detection sensor; 1431 - photoelectric sensor.

### Detailed Description

Embodiments of the technical solutions of the present disclosure will be described in detail below with reference to the accompanying drawings. The following embodiments are only used to more clearly illustrate the technical solution of the present disclosure, and therefore are only used as examples and cannot be used to limit the scope of protection of the present disclosure.

Unless otherwise defined, all technical and scientific terms used herein have the same meaning as commonly understood by those skilled in the art belonging to the technical field of the present disclosure; the terms used herein are intended only for the purpose of describing specific embodiments and are not intended to limit the present disclosure; the terms " including" and "having" and any variations thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, the meaning of "a plurality of" is two or more, unless otherwise explicitly and specifically defined.

Reference herein to "an embodiment" means that a particular feature, structure, or characteristic described in connection with the embodiment can be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present disclosure, the orientation or position relationships indicated by the technical terms "length", "width", "thickness", "up", "down", "front", "back", "left", "right", "vertical", "horizontal", "top", "bottom", "inside", "outside", "circumferential" and the like are based on the orientation or position relationships shown in the drawings, and are only for convenience and simplification of the description of the embodiments of the present disclosure, but do not indicate or imply that the apparatuses or elements referred to must have particular orientations, be constructed, operated or used in particular orientations, and therefore cannot be construed as a limitation of the embodiments of the present disclosure.

In the description of the embodiments of the present disclosure, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present disclosure can be understood according to specific situations.

In the description of the embodiments of the present disclosure, the technical term "contact" shall be understood in a broad sense, unless otherwise expressly specified and defined, which may be direct contact or contact through an intermediate media layer, and may be contact with basically no interaction force between the two in contact, or contact with an interaction force between the two in contact.

Next, the present disclosure will be described in detail.

At present, new energy batteries are increasingly used in daily life and industry. New energy batteries are used in energy storage power source systems such as hydraulic, thermal, wind and solar power stations as well as in electric vehicles such as electric bicycles, electric motorcycles and electric cars, and aerospace fields. With the continuous expansion of the application field of the power batteries, the market demand is also constantly expanding.

With the improvement of battery production technology, automated production lines are currently mostly used for battery manufacturing, assembly, conveying, inspection, etc.

There are many different types of fasteners in a battery pack. For example, there are multiple fasteners between a box and an upper cover of the battery pack, and there are also multiple fasteners between a battery module in the battery pack and the battery pack, or between adjacent battery modules. At present, an automated device is also commonly used to fasten the fasteners between the box and the upper cover of the battery pack.

However, in a solution for fastening the fasteners between the box and the upper cover of the battery pack provided in the related art, there is a shortcoming that the automation device is not flexible enough to fasten the fasteners, and there are many restrictions on use.

It should be noted that the battery pack in the embodiments of the present disclosure may be used in, but not limited to, an energy storage power supply systems, a vehicle, a ship, an aircraft and other electrical apparatuses. The use of the battery pack can provide higher total energy. Moreover, the battery pack is formed by placing multiple batteries in groups in a sealed box, and thus has more reliable dustproof and waterproof performances, so it can be used in harsher, humid, or even flooded environments.

In the battery pack, there may be a plurality of battery cells, and the plurality of battery cells may be connected in series or parallel or series-parallel connection. The series-parallel connection means that some of the plurality of battery cells are connected in series and some are connected in parallel. The plurality of battery cells may be directly connected in series or in parallel or in series-parallel. Of course, the battery may alternatively consist in that a plurality of battery cells are first connected in series, in parallel or in series-parallel to form a plurality of battery modules, and the plurality of battery modules are then connected in series or in parallel or in series-parallel to form a whole. The battery may further include other structures. For example, the battery may further include a bus component for electrically connecting the plurality of battery cells to each other.

In the embodiments of the present disclosure, the battery cell may be a secondary battery. The secondary battery refers to a battery cell that can be charged to activate the active material and continue to be used after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, etc., which will not be limited in the embodiments of the present disclosure.

An electrode assembly includes a positive electrode, a negative electrode, and a separator. During charging and discharging of the battery cell, active ions (e.g., lithium ions) are intercalated and deintercalated between the positive electrode and the negative electrode. The separator is arranged between the positive electrode and the negative electrode, and mainly functions to prevent a short circuit between the positive electrode and the negative electrode while enabling the active ions to pass through.

In some embodiments, the electrode assembly includes tabs that can direct electrical current away from the electrode assembly. The tabs include a positive tab and a negative tab.

In some embodiments, the battery cell may include an shell. The shell may be configured to package the electrode assembly, an electrolyte and other components. The shell may be a steel shell, an aluminum shell, a plastic shell (such as polypropylene), a composite metal shell (such as a copper-aluminum composite shell), an aluminum-plastic film, etc. The shell may further include a housing and a cover, and an accommodating cavity may be formed between the housing and the cover. Further, terminals may also be arranged on the cover.

As an example, the battery cell may be a cylindrical battery cell, a prismatic cell, a pouch cell or a battery cell of other shapes. The prismatic battery cell includes a cubic battery cell, a blade-shaped battery cell, and a polygonal prismatic battery. The polygonal prismatic battery is, for example, a hexagonal prismatic battery, etc., which is not particularly limited in the present disclosure.

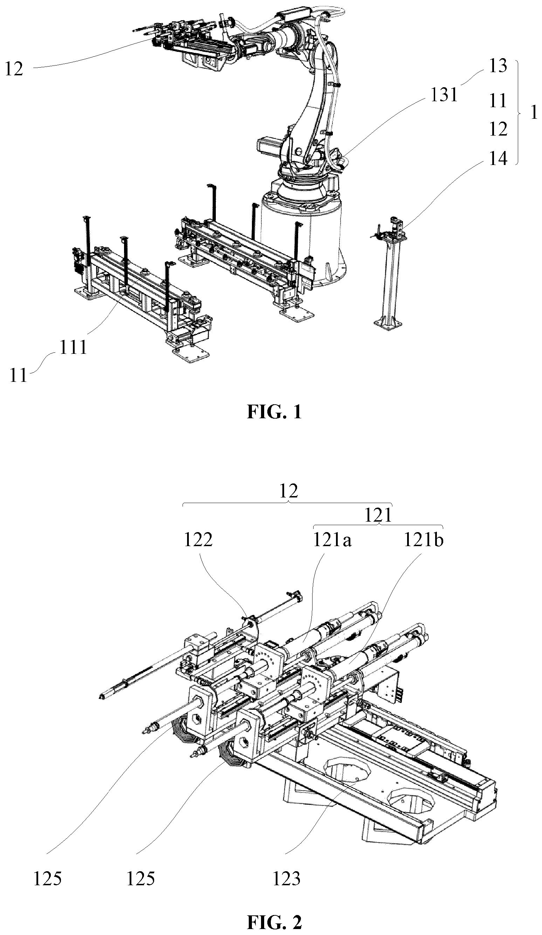

Some embodiments of the present disclosure are described in detail below with reference to Figs. 1 to 16.

Specifically, referring to Figs. 1, 2 and 11, the battery pack fastening system 1 provided in embodiments of the present disclosure includes an operating platform 11, a fastening assembly 12, a driving assembly 13 and a control module. The operating platform 11 includes a lifting mechanism 111 and a tray 114. The tray 114 is placed on the lifting mechanism 111, the tray 114 is provided with an accommodating portion in which a battery pack is placed, and an operating space is formed above the operating platform 11. The fastening assembly 12 includes a fastening component 121, a marking component 122 and an image capture component 125. The fastening component 121 is configured to fasten a fastener placed on the accommodating portion and between a box and an upper cover of the battery pack, the marking component 122 is configured to mark the fastener, and the image capture component 125 is configured to obtain an image of the fastener. The fastening assembly 12 is mounted to a free end of the driving assembly 13, and the driving assembly 13 is configured to drive the fastening assembly 12 to move to any position within the operating space. The driving assembly 13 and the image capture component 125 are both electrically coupled to the control module. The control module can form a visual guide for the movement of the fastening assembly 12 based on the image of the fastener obtained by the image capture component 125, so as to move the fastening assembly 12 to a position corresponding to the fastener to complete fastening or marking of the fastener.

It should be noted that in the embodiment of the present disclosure, the specific structural form of the operating platform 11 is not limited. The operating platform 11 can provide support for the battery pack and can lift the tray 114. There are various structural forms that can achieve the above purpose. Illustratively, the operating platform 11 may be configured as a table-type workbench, and the tray 114 holding the battery pack may be placed on a tabletop of the workbench, so that the battery pack can be operated conveniently. On this basis, The table-type workbench may be configured to have a lifting function. In this regard, the table-type workbench with the lifting function can also be considered as a lifting mechanism. Specifically, a driving member may be provided between legs and the tabletop of the workbench to drive the desktop to lift, thereby driving the tray 114 and the battery pack to lift. In addition, the operating platform 11 may also be configured in a targeted manner according to the conveying method of the battery pack in a battery pack production line. It should be noted that in the embodiments of the present disclosure, a conveyor belt may be used to convey the battery pack. In this regard, the operating platform 11 may be configured as the table-type workbench described above. In addition, an automated guided vehicle (AGV) may be used to convey the battery pack. An electromagnetic or optical guide device mounted on the AGV may be used to guide the travel of the AGV, such that the AGV can travel along a prescribed path. Generally, in order to facilitate the transportation of the battery pack, the tray 114 on the operating platform 11 may also be configured to travel with the AGV, thereby facilitating the transportation of the battery pack between different stations. In this regard, referring to Fig. 1, the operating platform 11 may be configured as a support frame-type structure that can facilitate the travel of the AGV. It should be noted that in the embodiment of the present disclosure, the AGV may be called a transport cart.

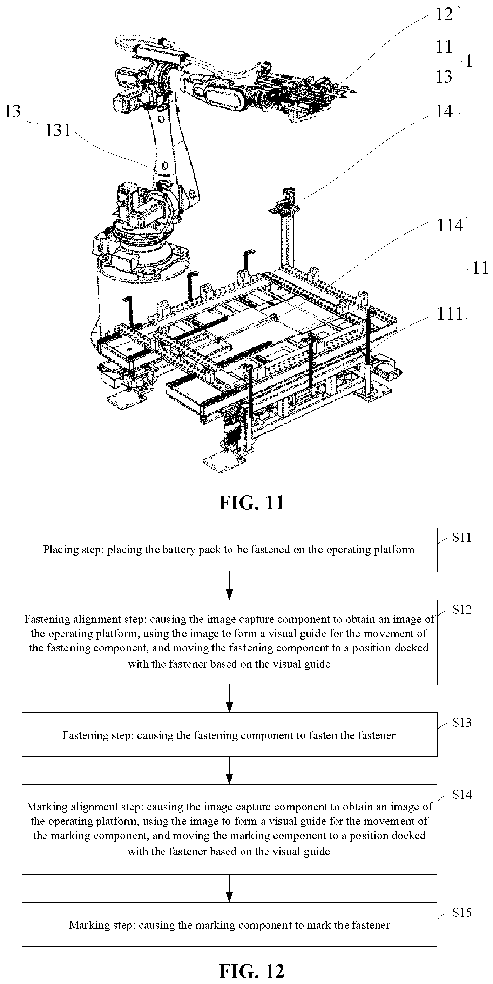

In addition, it should be noted that, in the embodiment of the present disclosure, the accommodating portion provided on the tray 114 is not limited. Specifically, the accommodating portion may be configured according to the shape of the battery pack. Moreover, in some embodiment of the present disclosure, the accommodating portion may also be configured to have an adjustable space. Illustratively, referring to Fig. 11, in some embodiment of the present disclosure, a support frame may be provided on the tray 114 to form the accommodating portion in which the battery pack is placed, and a lead screw may be provided on the tray 114 to adjust the size of the space of the support frame. In this way, battery packs of different models and specifications can be placed on the tray 114.

On this basis, an operating space is formed above the operating platform 11 for the battery pack fastening system 1 to operate the battery pack. By placing the battery pack in the operating space, the battery pack fastening system 1 can be used to operate the battery pack.

In addition, it should be noted that in the embodiment of the present disclosure, the specific structural form of the driving assembly 13 is not limited. The driving assembly 13 is configured to drive the fastening assembly 12 to move to any position in the operating space. Illustratively, referring to Fig. 1, a six-axis robot 131 may be used as the driving assembly 13 in the embodiment of the present disclosure. In addition, a vertically extending track may also be arranged above the operating platform 11, a manipulator is arranged on the track, and a driving member is arranged between the manipulator and the track, and is used to drive the manipulator to move forward, backward, left, and right in a horizontal direction and move in a vertical direction. In this way, the manipulator and the track and driving member can also be used to form the driving assembly 13.

In order to more vividly illustrate the battery pack fastening system 1 provided in the embodiments of the present disclosure, in the following description and accompanying drawings, the driving assembly 13 is configured as a six-axis robot 131 as an example.

Further, referring to Figs. 1 and 2, the battery pack fastening system 1 provided in the embodiments of the present disclosure further includes a fastening assembly 12. Specifically, the fastening assembly 12 in the embodiments of the present disclosure includes a fastening component 121, a marking component 122 and an image capture component 125. The fastening component 121 may apply torque to a fastener to be fastened, so as to fasten the fastener. The marking component 122 may mark a fastener to be marked. The image capture component 125 is configured to obtain an image of the fastener. Illustratively, in the embodiments of the present disclosure, an electronic device with an image capture function may be used as the image capture component 125 in the embodiments of the present application, or a camera may be directly used as the image capture component 125 in the embodiments of the present disclosure.

It can be understood that fasteners in the battery pack are of different types or different sizes. In this regard, fastening heads that can be quickly detached may be provided on the fastening component 121, so as to adapt to the fasteners of different types or different sizes. Illustratively, for a hexagonal-head bolt, the fastening head may be configured as a corresponding sleeve head.

It should be noted that a driving member may be provided in the fastening component 121 such that the fastener can be rotated, to apply torque to the fastener. In addition, the movement of the fastening assembly 12 may also be used to drive the fastening component 121 to move to apply torque to the fastener.

In addition, there is generally a corresponding pre-fastening torque for a fastener. When the corresponding pre-fastening torque is applied to the fastener, the fastener can provide a better connection function. In this regard, a torque sensor may also be provided in the fastening component 121 to detect the torque applied to the fastener, so that the fastening component 121 can be used to apply a corresponding pre-fastening torque to the fastener. It should be noted that, in addition to the monitoring of the torque applied by the fastening component 121 to the fastener to determine whether the fastener reaches the pre-fastening torque, an rotation angle of the fastener, a stretched length of the fastener, etc. may also be monitored to determine whether the fastener reaches the pre-fastening torque. In this regard, a sensor for measuring the rotation angle of the fastener or a sensor for measuring the stretched length of the fastener may also be provided in the fastening component 121 to determine whether the fastener reaches the pre-fastening torque.

On this basis, the fastening assembly 12 in the embodiments of the present disclosure further includes a marking component 122. The marking component 122 may be configured to mark a specific fastener to distinguish same from other fasteners.

It should be noted that in the embodiments of the present disclosure, the type of the fastener to be marked by the marking component 122 is not limited. For a battery pack, there are a plurality of fasteners in the battery pack generally. Illustratively, for the box and upper cover of the battery pack, a ring of fasteners are generally provided along a circumferential edge of the upper cover, and the fastening component 121 in the present disclosure can be used to fasten the fasteners in sequence. In this regard, the marking component 122 may be used to mark the fastener that has been fastened while leaving unfastened fasteners unmarked. In this way, it is possible to intuitively distinguish which fasteners are fastened and which fasteners are not fastened. In addition, in some embodiments of the present disclosure, the fastening component 121 may also be used to record the fastening results of the fasteners. In this way, it can be determined which fasteners have qualified fastening results and which fasteners have unqualified fastening results. In this regard, the marking component 122 may also be used to mark the fasteners with unqualified fastening results. In this way, it is possible to intuitively distinguish which fasteners have qualified fastening results and which fasteners have unqualified fastening results, to facilitate the subsequent processing of the fasteners with unqualified fastening results, such as re-fastening or replacement of the fasteners.

In addition, in the embodiments of the present disclosure, the manner in which the marking component 122 marks the fastener is not limited, as long as the marked fastener can be distinguished from unmarked fasteners. Illustratively, the marking component 122 may be configured in a manner similar to stamping a fastener. In addition, the marking component 122 may also be configured in a manner similar to drawing a line with a marker.

On this basis, where the fastener is marked using the marking component 122 in a manner similar to drawing a line with a marker, a line may be drawn only on the fastener; and it is also possible to draw lines on both the fastener and a structural member for mounting the fastener, so that the marking line can be used to monitor whether the fastener is loose or detached.

It should be noted that in the embodiments of the present disclosure, the image capture component 125 may be mounted independently from the operating platform 11, the fastening assembly 12 or the driving assembly 13, that is, the image capture component 125 may be independently mounted near the operating platform 11, so that the image capture component 125 remains relatively independent. In addition, in some embodiments of the present disclosure, it is also possible that the image capture component 125 is integrally mounted to the operating platform 11, the fastening assembly 12 or the driving assembly 13, that is, the image capture component 125 is mounted together with the operating platform 11, the fastening assembly 12 or the driving assembly 13. Illustratively, referring to Figs. 1 to 3, the image capture component 125 may be mounted together with the fastening assembly 12, so that the image capture component 125 can move together with the fastening assembly 12.

In addition, it should be noted that in the embodiments of the present disclosure, the type of camera of the image capture component 125 is not limited. Illustratively, a wide-angle lens may be used to configure the image capture component 125 in the embodiments of the present disclosure. The wide-angle lens can capture a wider picture, and thus can better obtain the image of the fastener. In addition, the number of cameras included in the image capture component 125 is not limited in the embodiments of the present disclosure. Illustratively, in some embodiments of the present disclosure, the number of cameras included in the image capture component 125 may be set to two or more. In this way, images of the fastener obtained by different cameras can be compared with each other, and the position of the fastener can be determined more accurately.

On this basis, the battery pack fastening system 1 provided in the embodiments of the present disclosure further includes a control module. The control module may be configured to process the image of the fastener obtained by the image capture component 125, and may be configured to control the driving assembly 13, so as to control the driving assembly 13 to drive the movement of the fastening assembly 12, so that the fastening assembly 12 can be controlled to move to any position in the operating space. Where the fastening component 121 and the marking component 122 include driving members, the control module may also be used to control the fastening component 121 and the marking component 122.

It should be noted that in the embodiments of the present disclosure, the type of the control module is not limited. Illustratively, a programmable logic controller (PLC) may be used to configure the control module, or another device with a processing function may be used to configure the control module. For example, an industrial computer may be used to configure the control module. In addition, in the embodiments of the present disclosure, the decentralized control system may also be used to perform decentralized processing of the fastening assembly 12, the driving assembly 13 and the image obtained by the image capture component 125. Specifically, a PLC may be provided for the fastening assembly 12, a PLC may be provided for the driving assembly 13, and an industrial computer may be provided for the PLCs and the image obtained by the image capture component 125. In this regard, the industrial computer may also be called a host computer, so that the strong processing power of the industrial computer can be used to process the image obtained by the image capture component 125, and the industrial computer can be used to transmit control signals to the aforementioned PLCs to control the movement of the fastening assembly 12 and the driving assembly 13.

On this basis, it can be considered that the control module in the embodiments of the present disclosure includes any device with a processing function in the battery pack fastening system 1.

In this way, in the embodiments of the present disclosure, the control module can process the image of the fastener obtained by the image capture component 125, and thus can determine the position of the fastener. On this basis, the control module can form a visual guide for the movement of the driving assembly 13 and the fastening assembly 12, so that the control module can control the driving assembly 13 to drive the fastening component 121 to move to the position corresponding to the corresponding fastener. On this basis, the fastening component 121 can be docked with the corresponding fastener, and the fastening component 121 can thus be used to complete fastening of the corresponding fastener. Further, it is also possible for the control module to control the driving assembly 13 to drive the marking component 122 to move to a position corresponding to the corresponding fastener. On this basis, the marking component 122 can be brought into contact with the corresponding fastener, and the marking component 122 can thus be used to complete marking of the corresponding fastener. Moreover, in the embodiments of the present disclosure, the control module controls the movement of the driving assembly 13 or the fastening assembly 12 based on the visual guide formed by the image obtained by the image capture component 125 for the movement of the driving assembly 13 or the fastening assembly 12. For different battery packs of different models and specifications, as well as fasteners at different positions of the battery pack, a good adaptation can be formed. Therefore, the battery pack fastening system 1 provided in the embodiments of the present disclosure can be applied to the production of battery packs of different models and specifications.

On this basis, referring to Figs. 1 to 3, in the embodiments of the present disclosure, the fastening assembly 12 includes a connecting bracket 123. The connecting bracket 123 is fixedly connected to the free end of the driving assembly 13, the fastening component 121 and the marking component 122 are mounted in an arrangement manner on the connecting bracket 123, and the image capture component 125 is also mounted on the connecting bracket 123.

It should be noted that the free end of the driving assembly 13 here refers to the relatively movable end of the driving assembly 13. Illustratively, referring to Fig. 1, where the driving assembly 13 in the embodiment of the present disclosure is configured as a six-axis robot 131, the free end of the driving assembly 13 refers to the free end of an end robotic arm of the six-axis robot 131. The configuration of the driving assembly 13 in other forms may also be understood with reference to the above description.

In this way, the connecting bracket 123 may be used to form a transitional connection at the free end of the driving assembly 13. By mounting the fastening component 121 and the marking component 122 on the connecting bracket 123, the fastening component 121 and the marking component 122 can be mounted easily.

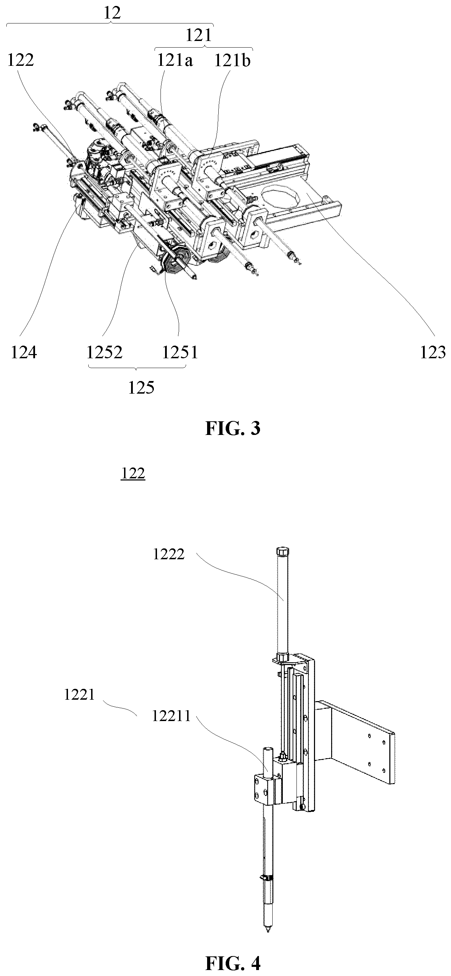

Further, in the embodiments of the present disclosure, the specific structural form of the connecting bracket 123 is not limited. Illustratively, referring to Figs. 2 and 3, the connecting bracket 123 may be configured as a plate-like structure.

On this basis, the fastening component 121 and the marking component 122 can be mounted in an arrangement manner on the connecting bracket 123. It should be noted that by the fastening component 121 and the marking component 122 being mounted in an arrangement manner on the connecting bracket 123, it is meant that the fastening component 121 and the marking component 122 extend in the same direction. In this way, the fastening component 121 and the marking component 122 can be positioned easily, to facilitate the control module to control the fastening component 121 or the marking component 122 to move to the position of the corresponding fastener.

Illustratively, referring to Figs. 1 and 2, where a six-axis robot 131 is used as the driving assembly 13 in the embodiments of the present disclosure, the extension direction of the connecting bracket 123 may be set to be the same as the extension direction of the end robot arm of the six-axis robot 131, and the fastening component 121 and the marking component 122 are mounted in an arrangement manner on the connecting bracket 123 according to the extension direction of the end robotic arm.

Further, in the embodiments of the present disclosure, the image capture component 125 may also be mounted on the connecting bracket 123, so that the driving assembly 13 can be used to drive the image capture component 125 and the fastening component 121 or the marking component 122 to move synchronously.

In this regard, a mounting bracket may be provided on the image capture component 125, and the mounting bracket may be fixedly connected to the connecting bracket 123, so that the camera of the image capture component 125 can be mounted on the mounting bracket.

In this way, with the above arrangement, the fastening component 121, the marking component 122 and the image capture component 125 are mounted by means of the connecting bracket 123, so that the fastening component 121, the marking component 122 and the image capture component 125 can be conveniently fixedly connected to the free end of the driving assembly 13, and it is also convenient for the control module to control the movement of the fastening component 121, the marking component 122 and the image capture component 125. On this basis, mounting the image capture component 125 on the connecting bracket 123 can make the picture obtained by the image capture component 125 follow the fastening component 121 or the marking component 122, and also make the picture of the fastener obtained by the image capture component 125 be targeted, so that the control module can control the movement of the fastening component 121 or the marking component 122 more accurately.

On this basis, in the battery pack fastening system 1 provided in some embodiments of the present disclosure, the number of fastening components 121 is also set to at least two, and all the fastening components 121 are arranged in an arrangement manner on the connecting bracket. In addition, in an embodiment of the present disclosure, the number of image capture components 125 is also set to at least two, and the image capture components 125 are arranged on the connecting bracket 123 in an arrangement manner of one-to-one correspondence with the fastening components 121.

It should be noted that in the embodiments of the present disclosure, the specific number of fastening components 121 is not limited. Illustratively, the number of fastening components 121 may be set to two, or the number of fastening components 121 may be set to more than two. Illustratively, referring to Figs. 2 and 3, the number of fastening components 121 may be set to two in the manner shown in Figs. 2 and 3. For setting the number of fastening components 121 to more than two, reference can made to that setting.

Furthermore, in the embodiments of the present disclosure, the relative positional relationship between the fastening component 121 and the marking component 122 is not limited. Illustratively, referring to Figs. 2 and 3, the marking component 122 may be arranged at one end of two or more fastening components 121 arranged in an arrangement manner. Furthermore, it is also possible that the marking component 122 is arranged between two or more fastening components 121 arranged in an arrangement manner.

Further, in the embodiments of the present disclosure, the number of image capture components 125 is also set to two or more, and all the fastening components 121 are provided with image capture components 125 in one-to-one correspondence, and each image capture component 125 is fixedly connected to the corresponding fastening component 121.

It should be noted that, in the embodiments of the present disclosure, by the fastening components 121 being provided with image capture components 125 in one-to-one correspondence, it is meant that each fastening component 121 is provided with a corresponding image capture component 125. In addition, in the embodiments of the present disclosure, the number of image capture components 125 may be set to be the same as the number of fastening components 121, or the number of image capture components 125 may be set to be greater than the number of fastening components 121. Illustratively, for the marking component 122, an image capture component 125 may also be provided for the marking component 122.

Referring to Figs. 2 and 3, in some embodiments of the present disclosure, the image capture component 125 may be provided only for the fastening component 121. In this regard, the relative positional relationship between the marking component 122 and the fastening component 121 can be used to position the marking component 122.

Illustratively, referring to Fig. 2, the number of fastening components 121 may be set to two, and the number of image capture components 125 may be set to two in the manner shown in Fig. 2.

In this way, by setting the number of fastening components 121 to at least two, more than two fasteners can be fastened simultaneously, thereby improving the fastening efficiency of the battery pack fastening system 1 in the embodiments of the present disclosure on the fasteners. On this basis, the image capture components 125 are arranged corresponding to all the fastening components 121 on a one-to-one basis, so that a more accurate visual guide can be provided for the movement of each fastening component 121.

In order to further improve the scope of application of the battery pack fastening system 1 in the embodiments of the present disclosure, in some embodiments of the present disclosure, some fastening components 121 among the fastening components 121 are also configured to have fixed positions relative to the connecting bracket 123, and the other fastening components 121 are configured to have adjustable positions relative to the connecting bracket 123.

Specifically, referring to Figs. 2 and 3, in the embodiments of the present disclosure, the fastening component 121 includes a fixed fastening component 121a and a movable fastening component 121b. There is one fixed fastening component 121a, and the fixed fastening component 121a is fixedly connected to connecting bracket 123. The movable fastening component 121b can adjust its position relative to the connecting bracket 123. On this basis, the marking component 122 is also fixedly connected to the connecting bracket 123 close to the fixed fastening component 121a.

Illustratively, referring to Fig. 2, a guide rail may be provided on the connecting bracket 123, and a guide groove may be provided on the movable fastening component 121b. By mounting the guide groove on the guide rail, the guide rail can be used to guide the movement of the movable fastening component 121b. Further, referring to Figs. 1 and 2, where a six-axis robot 131 is used as the driving assembly 13 in the embodiments of the present disclosure, an extension direction of the guide rail may be set to be perpendicular to the extension direction of the end robot arm.

With the above arrangement, in the battery pack fastening system 1 provided in the embodiments of the present disclosure, by configuring the fastening component 121 as a fixed fastening component 121a and a movable fastening component 121b, it is possible to adjust the relative position between the movable fastening component 121b and the fixed fastening component 121a, to match the relative positional relationship between the fixed fastening component 121a and the movable fastening component 121b with the relative positional relationship between different fasteners, so that the battery pack fastening system 1 provided in the embodiments of the present disclosure can fasten different fasteners at the same time, and the adaptability of the battery pack fastening system 1 in the embodiments of the present disclosure can be further improved. Moreover, by arranging the marking component 122 close to the fixed fastening component 121a, the position of the fixed fastening component 121a can be conveniently used to position the marking component 122, so that the position of the marking component 122 can be conveniently controlled.

Further, referring to Fig. 3, in order to facilitate the adjustment of the relative position of the movable fastening component 121b, in some embodiments of the present disclosure, the fastening assembly 12 further includes a first driving member 124. Specifically, the first driving member 124 is arranged between the connecting bracket 123 and the movable fastening component 121b, and the first driving member 124 is configured to drive the movable fastening component 121b to move relative to the connecting bracket 123. Moreover, the first driving member 124 is further electrically coupled to the control module, and the control module can control the first driving member 124 to drive the movement of the movable fastening component 121b based on the image of the fastener obtained by the image capture component 125.

It should be noted that in the embodiments of the present disclosure, the specific structural form of the first driving member 124 is not limited. Illustratively, a pneumatic cylinder, a hydraulic cylinder, an electric motor, etc. may be used as the first driving member 124 in the embodiments of the present disclosure. Specifically, where a pneumatic cylinder or a hydraulic cylinder is used as the first driving member 124 in the embodiments of the present disclosure, an output shaft of the pneumatic cylinder or the hydraulic cylinder may be used to directly drive the movable fastening component 121b to move relative to the fixed fastening component 121a to adjust the position. Where an electric motor is used as the first driving member 124 in the embodiments of the present disclosure, the movable fastening component 121b can be driven to move relative to the fixed fastening component 121a to adjust the position by means of rack and pinion transmission or lead screw transmission.

Illustratively, in some embodiments of the present disclosure, a stepper motor may be used as the first driving member 124 in the embodiments of the present disclosure, and an output shaft of the stepper motor is drivingly connected to the movable fastening component 121b via a lead screw transmission mechanism, so that the movable fastening component 121b can be driven to move relative to the connecting bracket 123, and the position of the movable fastening component 121b relative to the fixed fastening component 121a can thus be adjusted.

It should be noted that where the number of movable fastening components 121b is two or more, for each movable fastening component 121b, one first driving member 124 may be provided on the connecting bracket 123 between the connecting bracket 123 and each movable fastening component 121b, so that each first driving member 124 can be used to drive the corresponding movable fastening component 121b to adjust its position relative to the fixed fastening component 121a, and the relative position between the fixed fastening component 121a and each movable fastening component 121b can correspond to the relative position between the plurality of fasteners on the battery pack.

On this basis, the first driving member 124 is further electrically coupled to the control module. In this way, the control module can control the movement of the first driving member 124 according to the image of the fastener obtained by the image capture component 125, to make the relative positional relationship between the fixed fastening component 121a and the movable fastening component 121b correspond to the relative positional relationship of the fasteners.

In this way, in the battery pack fastening system 1 provided in the embodiments of the present disclosure, by arranging the first driving member 124 between the connecting bracket 123 and the movable fastening component 121b, and by electrically coupling the first driving member 124 to the control module, the control module can be used to control the movement of the movable fastening component 121b according to the image of the fastener obtained by the image capture component 125, so that the movable fastening component 121b can automatically move to a position matching the corresponding fastener, and the relative position between the fixed fastening component 121a and the movable fastening component 121b can be accurately controlled.

On this basis, referring to Figs. 2 and 3, in some embodiments of the present disclosure, the marking component 122 and the movable fastening component 121b are further respectively arranged on two sides of the fixed fastening component 121a, and the image capture component 125 corresponding to the fixed fastening component 121a is arranged between the marking component 122 and the fixed fastening component 121a.

Specifically, referring to Figs. 2 and 3, regarding the overall arrangement relationship of the marking component 122, the fixed fastening component 121a and the movable fastening component 121b, it can be seen that the marking component 122 is located at one end, while the movable fastening component 121b is located at the other end. In this way, a space can be provided for the movement of the movable fastening component 121b. Moreover, where the marking component 122 is fixedly mounted on the connecting bracket 123, the arrangement of the marking component 122 close to the fixed fastening component 121a can ensure that the relative positional relationship between the marking component 122 and the fixed fastening component 121a is fixed, so that the position of the fixed fastening component 121a can be used to indirectly determine the position of the marking component 122, and the movement of the marking component 122 can thus be controlled. Further, the image capture component 125 corresponding to the fixed fastening component 121a is arranged between the marking component 122 and the fixed fastening component 121a, which is also equivalent to arranging the image capture component 125 close to the marking component 122, so that the image capture component 125 can also be used to provide a visual guide for the movement of the marking component 122.

In addition, referring to Fig. 3, in order to improve the quality of the image of the fastener obtained by the image capture component 125, in some embodiments of the present disclosure, a supplementary lighting member 1251 is further provided for illuminating the fastener.

Specifically, referring to Fig. 3, in some embodiments of the present disclosure, the image capture component 125 includes a supplementary lighting member 1251 and an image capture member 1252, and an orientation of a light source of the supplementary lighting member 1251 is the same as an orientation of a lens of the image capture member 1252. The supplementary lighting member 1251 is configured to provide supplementary lighting to the fastener captured by the image capture member 1252. Moreover, in the embodiments of the present disclosure, the image capture member 1252 is further electrically coupled to the control module, and the control module can obtain and process the image captured by the image capture member 1252.

It should be noted that in the embodiments of the present disclosure, the specific structural form of the supplementary lighting member 1251 is not limited. Illustratively, the supplementary lighting member 1251 may be configured as a surface light source, or the supplementary lighting member 1251 may be arranged as point light sources in an arrangement manner.

In this way, the supplementary lighting member 1251 can be used to illuminate the fastener, so that even when the ambient light is dark, the image of the fastener captured by the image capture component 125 can be of higher quality, and the control accuracy of the control module on the movement of the fastening assembly 12 based on the image of the fastener captured by the image capture component 125 can thus be improved.

It should be noted that when processing the image, a strong processing capability is generally required. Therefore, an electronic device with a strong processing capability such as an industrial computer may be provided in the control module in the embodiments of the present disclosure, the image obtained by the image capture member 1252 is transmitted to the industrial computer, and the industrial computer is used to process the image.

On this basis, referring to Fig. 3, in the embodiments of the present disclosure, the supplementary lighting member 1251 is configured as an annular light source, and the annular light source is arranged between the image capture member 1252 and the fastener. The lens of the image capture member 1252 is located on an axis of the annular light source.

It should be noted that here, arranging the annular light source between the image capture member 1252 and the fastener is also equivalent to arranging the lens of the image capture member 1252 on the side of the annular light source close to the driving assembly 13.

Specifically, referring to Fig. 3, by the supplementary lighting member 1251 being configured as an annular light source, it is meant that the main structure of the supplementary lighting member 1251 is circular ring-shaped. Illustratively, referring to Fig. 3, a housing of the supplementary lighting member 1251 may be configured in a circular ring shape, and a ring of LED point light sources may be arranged in a circumferential arrangement on the circular ring-shaped housing of the supplementary lighting member 1251.

In addition, it should be noted that in the embodiments of the present disclosure, referring to Fig. 3 and in combination with Fig. 1, the lens of the image capture member 1252 is arranged on the side of the annular light source close to the driving assembly 13, which can also be considered that the supplementary lighting member 1251 is arranged in the orientation of the lens of the supplementary lighting member 1251. Further, referring to Fig. 3, the orientation of the lens of the image capture member 1252 is also arranged on the axis of the annular light source.

It can be understood that in the embodiments of the present disclosure, the distance between the annular light source and the lens of the image capture member 1252 may be adjusted according to the focal length of the lens of the image capture member 1252. It is preferred that the annular light source does not affect the picture of the fastener captured by the lens of the image capture member 1252 through the annular light source.

With the above arrangement, the supplementary lighting member 1251 is configured as an annular light source, and the lens of the image capture member 1252 is arranged on the axis of the annular light source, so that the supplementary lighting effect of the supplementary lighting member 1251 can be further improved, and the quality of the image of the fastener obtained by the image capture component 125 can thus be further improved.

In addition, in some embodiments of the present disclosure, a driving member may also be provided in the marking component 122 to drive the marking component 122 to complete a marking operation on the fastener. In this way, the movement of the driving assembly 13 can be simplified.

Specifically, referring to Figs. 3 and 4, in some embodiments of the present disclosure, the marking component 122 includes a marking tool 1221 and a second driving member 1222. The second driving member 1222 is arranged between the marking tool 1221 and the connecting bracket 123, and the second driving member 1222 is configured to drive the marking tool 1221 to move relative to the connecting bracket 123. Moreover, in the embodiments of the present disclosure, the second driving member 1222 is further electrically coupled to the control module, and the control module can control the second driving member 1222 to drive the movement of the marking tool 1221 based on the image of the fastener obtained by the image capture component 125.

It should be noted that in the embodiments of the present disclosure, the type of the second driving member 1222 is not limited. Illustratively, the second driving member 1222 may be configured as a pneumatic cylinder, a hydraulic cylinder, an electric motor, etc. In addition, in the embodiments of the present disclosure, the type of the marking tool 1221 is also not limited, which can be adaptively set according to the marking form of the marking component 122 on the fastener. Illustratively, with reference to the foregoing description, where the marking method of the marking component 122 is set to be similar to a stamping method, the marking tool 1221 may be configured as a stamping head. Where the marking method of the marking component 122 is set to be similar to drawing a line with a marker, the marking tool 1221 may be configured as a line drawing pen.

In addition, in the embodiments of the present disclosure, the direction of movement of the marking tool 1221 driven by the second driving member 1222 is not limited. The second driving member 1222 may have multiple degrees of freedom, or the second driving member 1222 may have only one degree of freedom, which can be set adaptively according to the position where the fastener needs to be marked, as long as the marking tool 1221 can mark the fastener at any position in the operating space.

Illustratively, referring to Fig. 1, a six-axis robot 131 may be used as the driving assembly 13 in the embodiments of the present disclosure. In this regard, the six-axis robot 131 can already meet the requirements of driving the fastening assembly 12 to any position in the operating space, and the fastening assembly 12 can be adjusted to any angle. In this case, referring to Fig. 4, it is possible for only the second driving member 1222 to complete the extension or retraction of the marking tool 1221 relative to the fastener. In this regard, the second driving member 1222 may be configured as a pneumatic cylinder or a hydraulic cylinder, so that the second driving member 1222 can have a simple type and be easy to arrange.

Illustratively, referring to Fig. 4, the second driving member 1222 may be arranged in the manner shown in Fig. 4. Specifically, referring to Fig. 4 and in combination with Fig. 1, the second driving member 1222 may be configured as a pneumatic cylinder, and the extension direction of an extension shaft of the pneumatic cylinder may be set to be parallel to the extension direction of the end robotic arm of the six-axis robot 131. In this way, when it is necessary to fasten and mark a fastener, the driving assembly 13 may be used to move the fastening assembly 12 to a pre-marking position first. In this position, the marking tool 1221 already faces the fastener to be marked. Then, the second driving member 1222 drives the marking tool 1221 to move toward the fastener, to complete the marking of the fastener. Finally, after the marking tool 1221 completes the marking of the fastener, the second driving member 1222 drives the marking tool 1221 to move away from the fastener. At this point, the marking component 122 completes the marking process of the fastener.

On this basis, by electrically coupling the second driving member 1222 to the control module, the control module can be used to provide a visual guide for the movement of the marking tool 1221 driven by the second driving member 1222 based on the image of the fastener obtained by the image capture component 125, so that the movement of the marking tool 1221 can be accurately controlled.

In this way, in the battery pack fastening system 1 provided in the embodiments of the present application, by providing an independent second driving member 1222 in the marking component 122, on the basis of the driving assembly 13 driving the movement of the fastening assembly 12, the second driving member 1222 can be reused to independently drive the movement of the marking tool 1221, so that the movement of the marking tool 1221 can be controlled more accurately.

Further, referring to Fig. 4, in some embodiments of the present disclosure, the fastener is marked using a method similar to drawing a line with a marker.

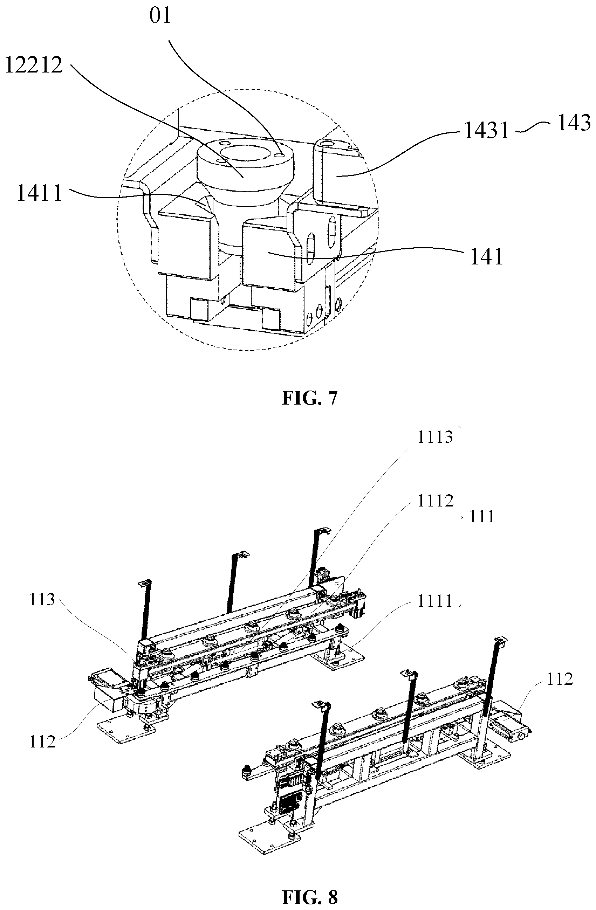

Specifically, referring to Figs. 4 and 7, in the embodiments of the present disclosure, the marking tool 1221 includes a marking pen 12211 and a pen cap 12212. The marking pen 12211 is provided with a marking portion at one end away from the driving assembly 13, and the marking portion is configured to draw a marking line on the fastener. The pen cap 12212 detachably covers the marking portion.

It should be noted that in the embodiments of the present disclosure, the marking pen 12211 may be configured as various types of line drawing pens such as ink pens or watercolor pens, and the marking portion of the marking pen 12211 can be considered to be a line drawing portion of the aforementioned various types of line drawing pens. When it is not necessary to mark the fastener with the marking pen 12211, the marking portion can be protected by covering the marking portion with the pen cap 12212. When it is necessary to use the marking pen 12211 to mark the fastener, the pen cap 12212 can be removed from the marking pen 12211.

With the above arrangement, in the battery pack fastening system 1 provided in the embodiments of the present disclosure, the marking pen 12211 is used to draw a line on the fastener, so that the structure of the marking tool 1221 can be simplified, and the marking form of the marking pen 12211 on the fastener can also be simple. Moreover, by providing the pen cap 12212, the marking pen 12211 can also be protected and the service life of the marking pen 12211 can be prolonged.

On this basis, referring to Figs. 1, 6 and 7, in some embodiments of the present disclosure, the battery pack fastening system 1 further includes a clamping assembly 14. The clamping assembly 14 remains fixed relative to the operating platform 11; and the clamping assembly 14 includes at least two clamping members 141. The clamping members 141 can move closer to or away from each other to clamp or release the pen cap 12212.

It should be noted that in some embodiments of the present disclosure, the clamping assembly 14 may be configured as a non-powered mechanical structure. Illustratively, in some embodiments of the present disclosure, the clamping assembly 14 may be configured as a pressing self-locking structure. In addition, the clamping assembly 14 may also be configured as a clamping structure having a driving member, which is not limited in the embodiments of the present disclosure.

In addition, referring to Fig. 1, in the embodiment of the present disclosure, the clamping assembly 14 may be arranged separately, and may be arranged near the operating platform 11. In addition, the clamping assembly 14 may be arranged on the operating platform 11, as long as it does not affect the placement of the battery pack on the operating platform 11.

In this way, in the battery pack fastening system 1 provided in the embodiment of the present disclosure, when it is necessary to use the marking pen 12211 to mark the fastener, the driving assembly 13 may be used to drive the marking pen 12211 and the pen cap 12212 to move to between the clamping members 141. At this time, by using the clamping members 141 to clamp the pen cap 12212, when the driving assembly 13 or the second driving member 1222 drives the marking pen 12211 to move away from the clamping members 141, the marking pen 12211 can be disengaged from the pen cap 12212. After the marking pen 12211 completes marking of the fastener, when the driving assembly 13 or the second driving member 1222 drives the marking pen 12211 to be inserted into the pen cap 12212, the clamping members 141 release the pen cap 12212, so that the pen cap 12212 can move together with the marking pen 12211, and the pen cap 12212 thus protects the marking pen 12211.

On this basis, in some embodiments of the present disclosure, in order to make the clamping assembly 14 clamp or release the pen cap 12212 more accurately, the clamping assembly 14 is further provided with a clamping structure having a driving member.

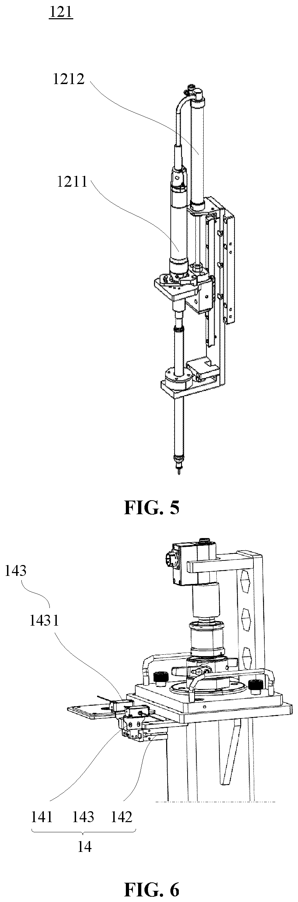

Specifically, referring to Fig. 6, in some embodiments of the present disclosure, the clamping assembly 14 further includes a third driving member 142. The third driving member 142 is configured to drive the clamping members 141 to move closer to or away from each other.

It should be noted that in some embodiments of the present disclosure, the type of the third driving member 142 is not limited. Illustratively, the third driving member 142 may be configured as a pneumatic cylinder, a hydraulic cylinder, an electric motor, or other driving members. In addition, the number of third driving members 142 may be set to be the same as the number of clamping members 141, and the third driving members 142 and the clamping members 141 may be arranged in one-to-one correspondence. In addition, it is also possible to provide one third driving member 142, and a transmission structure is provided between the third driving member 142 and all the clamping members 141 such that one third driving member 142 can drive all the clamping members 141 to move closer to or away from each other.

Illustratively, the description will be made by taking an example in which the number of clamping members 141 is set to be two and the third driving member 142 is configured as a pneumatic cylinder.

Specifically, a "Y"-shaped guide rail may be provided on an output shaft of the pneumatic cylinder, the two clamping members 141 are respectively provided on two branches of the "Y"-shaped guide rail, and the clamping members 141 are limited such that the clamping members 141 do not move drive as an extension shaft of the pneumatic cylinder drives the "Y"-shaped guide rail to extend or retract. In this way, when the extension shaft of the pneumatic cylinder drives the "Y"-shaped guide rail to extend, the two clamping members 141 will move closer to each other, such that the clamping members 141 can clamp the pen cap 12212; and when the extension shaft of the pneumatic cylinder drives the "Y"-shaped guide rail to retract, the two clamping members 141 will move away from each other, such that the clamping members 141 can release the pen cap 12212.

On this basis, in the embodiments of the present disclosure, the third driving member 142 is further electrically coupled to the control module. The control module can control the movement of the third driving member 142, such that the clamping members 141 can be controlled to clamp or release the pen cap 12212. Specifically, when it is necessary for the marking pen 12211 to draw a marking line on the fastener, the driving assembly 13 and the second driving member 1222 drive the marking pen 12211 and the pen cap 12212 to move to between the clamping members 141. At this time, the control module controls the movement of the third driving member 142 such that the clamping members 141 clamp the pen cap 12212. Subsequently, the driving assembly 13 or the second driving member 1222 drives the marking pen 12211 to move away from the pen cap 12212, so that the marking pen 12211 can be disengaged from the pen cap 12212, and the control module then controls the movement of the marking pen 12211 to complete marking of the fastener.

When the marking pen 12211 completes the drawing of a marking line on the fastener, the control module controls the driving assembly 13 and the second driving member 1222 to drive the marking pen 12211 to be inserted into the pen cap 12212, such that the marking pen 12211 is connected to the pen cap 12212. Thereafter, the control module controls the movement of the third driving member 142 such that the clamping members 141 release the pen cap 12212. Thereafter, the driving assembly 13 drives the fastening assembly 12 to move to other places, so that the fastening assembly 12 can complete other operations, such as fastening the fastener with the fastening component 121.

In this way, in the battery pack fastening system 1 provided in the embodiments of the present disclosure, by configuring the clamping assembly 14 to include the third driving member 142, the control module can be conveniently used to control the movement of the third driving member 142, thereby conveniently controlling the clamping members 141 to clamp or release the pen cap 12212.

In addition, in order to smoothly disengage the pen cap 12212 from the marking pen 12211 and also conveniently connect same to the marking pen 12211, in some embodiments of the present disclosure, the detachable connection between the marking pen 12211 and the pen cap 12212 is configured as magnetic connection.

Specifically, a magnet 01 may be provided on a part of the marking pen 12211 that is configured for contact with the pen cap 12212, and a magnet 01 may be provided on a part of the pen cap 12212 that is in contact with the marking pen 12211, so that the marking pen 12211 and the pen cap 12212 can be attracted to each other through the opposite properties of the magnets 01, thereby connecting the marking pen 12211 and the pen cap 12212 together.

It should be noted that, in addition to the magnets 01 described above, an electromagnet may be provided on the marking pen 12211 or the pen cap 12212. In addition, it is also possible to provide a magnet 01 or an electromagnet on one of the marking pen 12211 or the pen cap 12212, and to provide a ferromagnetic metal on the other of the marking pen 12211 or the pen cap 12212.

In this way, in the battery pack fastening system 1 provided in the embodiments of the present disclosure, by configuring the connection between the marking pen 12211 and the pen cap 12212 as a magnetic connection, the connection between the marking pen 12211 and the pen cap 12212 can be made simple and reliable.

Further, in some embodiments of the present disclosure, the material of a main body of the marking pen 12211 is set to a ferromagnetic metal. Referring to Fig. 7, a plurality of magnets 01 are arranged in a circumferential distribution on contacting surfaces of the pen cap 12212 and the marking pen 12211.

In this way, by setting the material of the main body of the marking pen 12211 to a ferromagnetic metal and by providing the magnets 01 on the pen cap 12212, the magnets 01 provided on the pen cap 12212 can be attracted to the marking pen 12211 without the need to distinguish the magnetism of the magnets 01, facilitating the connection between the pen cap 12212 and the marking pen 12211. Moreover, by setting the material of the main body of the marking pen 12211 to a ferromagnetic metal, there is no need to make other settings for the marking pen 12211, which can make the marking pen 12211 simple in structure and facilitate the production of the marking pen 12211.

In addition, in some embodiments of the present disclosure, referring to Fig. 7, the clamping members 141 are further provided with guide slopes 1411. The guide slopes 1411 are configured to guide the movement of the pen cap 12212 to between the clamping members 141.

Illustratively, referring to Fig. 7, in some embodiments of the present disclosure, a clamping portion may be provided between adjacent clamping members 141 such that the shape of the clamping portion matches the shape of the pen cap 12212, so as to enable the clamping of the pen cap 12212. In this regard, the side of the clamping portion facing the marking pen 12211 may be configured as a tapered groove, so that a slope of the tapered groove can be used to guide the movement of the pen cap 12212 to between the clamping members 141.

With the above arrangement, the guide slopes 1411 can be used to guide the movement of the pen cap 12212 to between the clamping members 141, so that the pen cap 12212 can be smoothly moved to between the clamping members 141, and the clamping members 141 can smoothly realize the clamping of the pen cap 12212.

In addition, referring to Fig. 7, in some embodiments of the present disclosure, the clamping assembly 14 further includes a pen cap detection sensor 143. The pen cap detection sensor 143 is configured to detect whether the pen cap 12212 is located between the clamping members 141.

It should be noted that in the embodiments of the present disclosure, the specific type of the pen cap detection sensor 143 is not limited. Illustratively, the pen cap detection sensor 143 may be configured as a contact sensor. In this way, it is possible to use the detection sensor to detect whether the pen cap 12212 is located between the clamping members 141 by arranging the pen cap detection sensor 143 in a position where the clamping members 141 can come into contact with the pen cap 12212. In addition, a non-contact sensor may be used as the pen cap detection sensor 143 in the embodiments of the present disclosure. For example, a radar, infrared or photoelectric sensor 1431 may be used as the pen cap detection sensor 143 in the embodiments of the present disclosure, which is not limited in the embodiments of the present disclosure.

On this basis, in the embodiments of the present disclosure, the pen cap detection sensor 143 is further electrically coupled to the control module. In this way, the control module can be used to obtain a signal from the pen cap detection sensor 143 to determine whether the pen cap 12212 is clamped between the clamping members 141. Further, a prerequisite for the control module to control the marking pen 12211 to draw a marking line on the fastener includes that the pen cap detection sensor 143 detects that the pen cap 12212 is located between the clamping members 141.

Here, only when the pen cap detection sensor 143 detects that the pen cap 12212 is located between the clamping members 141, the control component controls the driving assembly 13 and the second driving member 1222 to control the marking pen 12211 to move to a position corresponding to the fastener, so as to draw a marking line on the fastener. This also means that the pen cap 12212 is not on the marking pen 12211, and the marking pen 12211 can be used to mark the fastener. When the pen cap detection sensor 143 does not detect that the pen cap 12212 is located between the clamping members 141, it can be considered that the pen cap 12212 is located on the marking pen 12211. At this time, the marking pen 12211 cannot be used to mark the fastener smoothly.

In this way, in the battery pack fastening system 1 provided in the embodiments of the present disclosure, by providing the pen cap detection sensor 143, the pen cap detection sensor 143 can be conveniently used to detect whether the pen cap 12212 is located between the clamping members 141. Moreover, by electrically coupling the pen cap detection sensor 143 to the control module, the control module can be used to obtain a signal indicating whether the pen cap 12212 is located between the clamping members 141 represented by the pen cap detection sensor 143, so that the marking pen 12211 can be controlled based on the above signal to draw a line on the fastener, and the adaptability of the battery pack fastening system 1 in the embodiments of the present disclosure can be further improved.

On this basis, referring to Figs. 6 and 7, in some embodiments of the present disclosure, in order to improve the accuracy of the pen cap detection sensor 143, the pen cap detection sensor 143 is alternatively configured as a photoelectric sensor 1431.

Here, the position of the photoelectric sensor 1431 may be set adaptively with the position of the pen cap 12212 between the clamping members 141. When the pen cap 12212 is located between the clamping members 141, the pen cap 12212 blocks an optical signal of the photoelectric sensor 1431, so that an output voltage of the photoelectric sensor 1431 can change accordingly. On this basis, the control module can be used to monitor the output voltage of the photoelectric sensor 1431, so that it can be determined whether the pen cap 12212 is located between the clamping members 141.

Illustratively, referring to Figs. 6 and 7, in the embodiments of the present disclosure, a through-beam photoelectric sensor 1431 can be used as the pen cap detection sensor 143 in the embodiments of the present disclosure. Specifically, the through-beam photoelectric sensor 1431 includes a light output end and a light receiving end. When the clamping members 141 are located between the light output end and the light receiving end, they can block the propagation of light between the light output end and the light receiving end, so that it can be determined whether the pen cap 12212 is located between the clamping members 141.

In this way, in the embodiments of the present disclosure, by configuring the pen cap detection sensor 143 as the photoelectric sensor 1431, the accuracy of the detection result of the pen cap detection sensor 143 on whether the pen cap 12212 is located between the clamping members 141 can be improved.

In addition, referring to Figs. 2 and 5, in some embodiments of the present disclosure, the fastening component 121 further includes a fastening tool 1211 and a fourth driving member 1212. The fourth driving member 1212 is arranged between the fastening tool 1211 and the connecting bracket 123, and the fourth driving member 1212 can drive the fastening tool 1211 to move relative to the connecting bracket 123.

It should be noted that in the embodiments of the present disclosure, the type of the fourth driving member 1212 is not limited. Illustratively, the fourth driving member 1212 may be configured as a pneumatic cylinder, a hydraulic cylinder, an electric motor, etc. In addition, in the embodiments of the present disclosure, the way in which the fourth driving member 1212 drives the fastening tool 1211 is not limited. The fourth driving member 1212 may have multiple degrees of freedom, or the fourth driving member 1212 may have only one degree of freedom. In addition, it should be noted that in the embodiments of the present disclosure, the fastening tool 1211 may have its own driving member that drives the fastener to rotate.

Illustratively, referring to Fig. 1, a six-axis robot 131 may be used as the driving assembly 13 in the embodiments of the present disclosure. In this regard, the six-axis robot 131 can already meet the requirements of driving the fastening assembly 12 to any position in the operating space, and the fastening assembly 12 can be adjusted to any angle. In this case, it is possible for only the fourth driving member 1212 to complete the extension or retraction of the fastening tool 1211 relative to the fastener. In this regard, the fourth driving member 1212 may be configured as a pneumatic cylinder or a hydraulic cylinder, so that the fourth driving member 1212 can have a simple type and be easy to arrange.

Illustratively, referring to Fig. 5, the fourth driving member 1212 may be arranged in the manner shown in Fig. 5. Specifically, referring to Figs. 1 and 5, the fourth driving member 1212 may be configured as a pneumatic cylinder, and the extension direction of an extension shaft of the pneumatic cylinder may be set to be parallel to the extension direction of the end robotic arm of the six-axis robot 131. In this way, when it is necessary to fasten a fastener, the driving assembly 13 may be used to move the fastening assembly 12 to a pre-fastening position first. In this position, the fastening tool 1211 already faces the fastener to be fastened. Then, the fourth driving member 1212 drives the fastening tool 1211 to move toward the fastener, to complete the fastening of the fastener. Finally, after the fastening tool 1211 completes the fastening of the fastener, the fourth driving member 1212 drives the fastening tool 1211 to move away from the fastener. At this point, the fastening component 121 completes the fastening process of the fastener.

On this basis, by electrically coupling the fourth driving member 1212 to the control module, the control module can be used to provide a visual guide for the movement of the fastening tool 1211 driven by the fourth driving member 1212 based on the image of the fastener obtained by the image capture component 125, so that the movement of the fastening tool 1211 can be accurately controlled.

In addition, where the battery pack fastening system 1 in the embodiments of the present disclosure includes the second driving member 1222, the type of the fourth driving member 1212 and the type of the second driving member 1222 can be set to be the same. Illustratively, referring to Figs. 2, 4 and 5, in some embodiments of the present disclosure, the second driving member 1222 and the fourth driving member 1212 may be both configured as pneumatic cylinders.

In this way, in the battery pack fastening system 1 provided in the embodiments of the present disclosure, by providing an independent fourth driving member 1212 in the fastening component 121, on the basis of the driving assembly 13 driving the movement of the fastening assembly 12, the fourth driving member 1212 can be reused to independently drive the movement of the fastening tool 1211, so that the movement of the fastening tool 1211 can be controlled more accurately.

In addition, referring to Fig. 8, in some embodiments of the present disclosure, the operating platform 11 includes a lifting mechanism 111. The lifting mechanism 111 includes a base 1111, a raising member 1112 and a fifth driving member 1113. The fifth driving member 1113 is arranged between the base 1111 and the raising member 1112. The fifth driving member 1113 is configured to drive the raising member 1112 to move in the vertical direction, such that the raising member 1112 raises the tray 114. Moreover, the fifth driving member 1113 is further electrically coupled to the control module, and the control module can control the fifth driving member 1113 to drive the movement of the raising member 1112.

It should be noted that in the embodiments of the present disclosure, the type of the fifth driving member 1113 is not limited. The fifth driving member 1113 may be configured as a pneumatic cylinder, a hydraulic cylinder, an electric motor, etc. In addition, where the fifth driving member 1113 is configured as a pneumatic cylinder or a hydraulic cylinder, the extension direction of an output shaft of the fifth driving member 1113 may be set in the vertical direction, so that the fifth driving member 1113 can be used to directly drive the raising member 1112 to move in the vertical direction; or the extension direction of the output shaft of the fifth driving member 1113 may also be set to have an angle with the vertical direction, and the movement direction of the output shaft of the fifth driving member 1113 is changed by means of a transmission mechanism, such that the fifth driving member 1113 can also drive the raising member 1112 to move in the vertical direction.

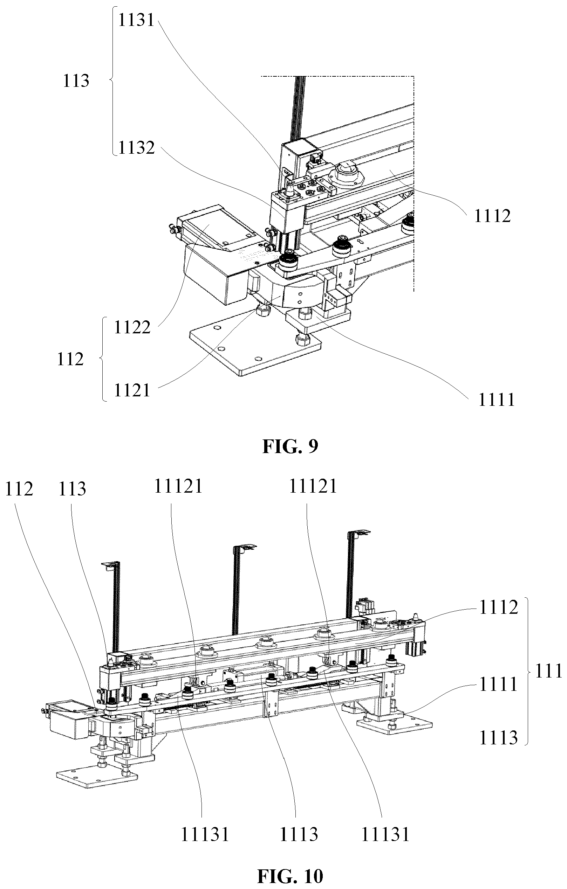

Illustratively, referring to Figs. 8 and 10, in some embodiments of the present disclosure, the fifth driving member 1113 may be configured as a pneumatic cylinder, and the extension direction of the output shaft of the pneumatic cylinder may be set in a horizontal direction. An elevation slope 11131 is provided on the output shaft of the pneumatic cylinder and a guide wheel 11121 is provided on the raising member 1112, so that the cooperation between the elevation slope 11131 and the guide wheel 11121 enables the fifth driving member 1113 to complete the elevation or lowering of the raising member 1112 in the vertical direction.

In addition, referring to Fig. 10, in the embodiment of the present disclosure, a pneumatic cylinder may also be used as the fifth driving member 1113, two elevation slopes 11131 are drivingly connected to an output shaft of the pneumatic cylinder, and corresponding guide wheels 11121 are provided on the raising member 1112, so that it is possible to use one pneumatic cylinder to drive different parts of the raising member 1112 to elevate or lower at the same time, the number of pneumatic cylinders used can be reduced, and the elevation or lowering of the raising member 1112 can also be easy to control.

On this basis, in the embodiments of the present disclosure, by electrically coupling the fifth driving member 1113 to the control module, the image obtained by the image capture component 125 can be used to provide a visual guide for the movement of the fifth driving member 1113. In addition, other control signals may also be used to control the elevation or lowering of the raising member 1112 by the fifth driving member 1113.

In this way, in the battery pack fastening system 1 provided in the embodiments of the present disclosure, by configuring the operating platform 11 to have a lifting function, the matching of the relative positions between the battery pack and the fastening assembly 12 can be further facilitated. Moreover, it is also possible to make the movement of the driving assembly 13 simple and convenient to control. On this basis, with the above arrangement, the range of the operating space of the battery pack fastening system 1 in the embodiments of the present disclosure can also be expanded.

On this basis, referring to Figs. 1, 8 and 11, in some embodiments of the present disclosure, there are two lifting mechanisms 111, and the two lifting mechanisms 111 are arranged opposite to each other. There is a gap between the two lifting mechanisms 111, and the gap forms a transport path for the battery pack to be transported by a transport cart and the tray 114. Moreover, a blocking component 112 is provided on the base 1111 of the lifting mechanism 111. The blocking component 112 includes a blocking member 1121 and a sixth driving member 1122. The sixth driving member 1122 is configured to drive the blocking member 1121 to move to the transport path formed by the gap, to limit the transport cart between the two lifting mechanisms 111. Moreover, the sixth driving member 1122 is electrically coupled to the control module, and the control module can control the sixth driving member 1122 to drive the movement of the blocking member 1121, so as to limit or release the limit on the transport cart.

In this regard, it needs to be explained that in the battery pack production line, the AGV and the tray 114 are often used to transport the battery pack between various stations of the production line. In view of this situation, referring to Figs. 1 and 8, in the embodiments of the present disclosure, the number of lifting mechanisms 111 is set to two, and the gap between the two lifting mechanisms 111 can be used to form a transport path for the battery pack to be transported by the AGV. Specifically, when the transport cart transports the battery pack, the tray 114 is placed above the transport cart, and the battery pack is placed in the tray 114. In this regard, when the transport cart carries the tray 114 and transports it between the two lifting mechanisms 111, the fifth driving member 1113 may be used to drive the raising member 1112 to raise the tray 114 for elevation, so that the tray 114 can be separated from the transport cart to facilitate the positioning of the tray 114, and the transport cart can also be moved to other stations for other operations.

In addition, it should be noted that in the embodiments of the present disclosure, the gap between the two lifting mechanisms 111 is not limited. Specifically, the gap can be adapted according to the sizes of the transport cart and the tray 114.

On this basis, in the battery pack fastening system 1 in the embodiments of the present disclosure, in order to ensure that during raising of the tray 114, the positions of the transport cart and the tray 114 remain relatively fixed with respect to the lifting mechanism 111,and the blocking component 112 can be used to limit the transport cart.

Illustratively, referring to Figs. 8 and 9, a blocking member 1121 that can extend between the two lifting mechanisms 111 relative to the base 1111 may be provided on the base 1111 to limit the transport cart. Specifically, one blocking component 112 may be provided at each of two ends of the base 1111 along the transport path of the transport cart. It should be noted that, referring to Fig. 8, in some embodiments of the present application, one of the blocking components 112 may be arranged on one base 1111, and the other blocking component 112 may be arranged on another base 1111. In this way, when the transport cart moves to between the two lifting mechanisms 111 and needs to elevate the tray 114, the blocking members 1121 of the two blocking components 112 extend into the transport path, so that the transport cart can be limited. After the lifting mechanism 111 completes elevation of the tray 114, the two blocking members 1121 are withdrawn from the transport path, thereby releasing the limit on the transport cart, and the transport cart can travel to other stations.

In the embodiments of the present disclosure, the control module may be used to automatically control the sixth driving member 1122 such that the blocking component 112 automatically limits or releases the limit on the transport cart. Illustratively, a position sensor may be provided on the lifting mechanism 111 to detect the position of the transport cart or the tray 114 or the battery pack, and the control module may also be used to interlock an elevation signal of the lifting mechanism 111 with the movement of the sixth driving member 1122.

In this way, with the above arrangement, in the battery pack fastening system 1 provided in the embodiments of the present disclosure, the number of lifting mechanisms 111 is set to two, and the gap between the two lifting mechanisms 111 can be used to form a transport path for the transport cart, so that the lifting mechanisms 111 can be matched with the characteristics of the battery pack production line. Moreover, by providing the blocking components 112 on the bases 1111 of the lifting mechanisms 111, the transport cart can be limited between the lifting mechanisms 111, so that it can be ensured that the lifting mechanisms 111 can smoothly elevate the tray 114 and the battery pack, and the reliability of the battery pack fastening system 1 in the embodiments of the present disclosure can be improved.

On this basis, in the battery pack fastening system 1 provided in the embodiments of the present disclosure, the lifting mechanism 111 further includes a locking component 113. The locking component 113 includes a locking member 1131 and a seventh driving member 1132. The seventh driving member 1132 can drive the locking member 1131 to move in the vertical direction to extend into a locking hole provided in the tray 114, so as to lock the tray 114 between the lifting mechanisms 111. On this basis, the seventh driving member 1132 is further electrically coupled to the control module, and the control module can control the seventh driving member 1132 to drive the movement of the locking member 1131.

Illustratively, referring to Fig. 9 and in combination with Fig. 11, in the embodiments of the present disclosure, the locking member 1131 may be configured as a positioning pin, and a positioning hole corresponding to the positioning pin is provided in the tray 114. After the elevation of the tray 114 by the lifting mechanism 111 is completed, the tray 114 can be positioned by elevating the positioning pin and extending same into the positioning hole, so as to prevent the tray 114 or the battery pack from being displaced relative to the lifting mechanism 111 during fastening or marking of the battery pack by the fastening assembly 12.

In this way, in the battery pack fastening system 1 provided in the embodiments of the present disclosure, the locking component 113 can be used to position the tray 114 and the battery pack to prevent the tray 114 or the battery pack from being displaced relative to the lifting mechanism 111 during fastening or marking of the battery pack by the fastening assembly 12, so that the reliability of the battery pack fastening system 1 in the embodiments of the present disclosure can be further improved.

On this basis, referring to Fig. 11, the battery pack fastening system 1 in the embodiments of the present disclosure will be described below, taking the battery pack fastening system 1 in Fig. 11 as an example.

First, the transport cart carries the tray 114 and the battery pack to transport same from other stations to the gap between the two lifting mechanisms 111. The control module determines that the transport cart has been transported to between the two lifting mechanisms 111 according to position detection sensors provided on the lifting mechanisms 111.

Next, the control module controls the sixth driving member 1122 to drive the blocking member 1121 to extend into the gap between the two lifting mechanisms 111 to limit the transport cart.

Further, the control module controls the seventh driving member 1132 to drive the locking member 1131 to move in the vertical direction and extend into the locking hole in the tray 114, so that the tray 114 is positioned. In this case, the control module can control the sixth driving member 1122 to retract, and the transport cart can travel to other stations to perform other operations.

Next, the control module provides a visual guide for the driving assembly 13 based on the image of the fastener obtained by the image capture component 125, and controls the fastening assembly 12 to move to a position above the fastener and close to the fastener.

The fourth driving member 1212 drives the fastening tool 1211 to dock with the fastener and complete the fastening of the fastener. After the fastening assembly 12 completes the fastening operation of the previous fastener, the driving assembly 13 drives the fastening assembly 12 to move to the position of the next fastener to complete the fastening operation of the next fastener. The above operations are repeated to complete the fastening of all the fasteners.

Further, the driving assembly 13 controls the fastening assembly 12 to move to the position of the clamping assembly 14, and the control module controls the third driving member 142 to drive the clamping members 141 to move away from each other. After the driving assembly 13 or the second driving member 1222 drives the pen cap 12212 to make same located between the clamping members 141, the third driving member 142 drives the clamping members 141 to move closer to each other, so as to clamp the pen cap 12212 between the clamping members 141.

Thereafter, the driving assembly 13 or the second driving member 1222 drives the marking pen 12211 to move in a direction away from the pen cap 12212, so that the marking pen 12211 is disengaged from the pen cap 12212.

On this basis, the fastening assembly 12 and the second driving member 1222 drive the marking tool 1221 to come into contact with the corresponding fastener to complete the marking operation on the corresponding fastener.

Thereafter, the fastening assembly 12 or the second driving member 1222 drives the marking tool 1221 to return to the position of the clamping assembly 14, such that the marking pen 12211 is inserted into the pen cap 12212, and then the control module controls the third driving member 142 to drive the clamping members 141 to move away from each other, causing the clamping members 141 to release the pen cap 12212. At this point, the fastening and marking operations of the fastener are completed.

In addition, the embodiments of the present disclosure also provide a method for using a battery pack fastening system. The battery pack fastening system is configured to fasten a fastener between a box and an upper cover of a battery pack and includes an operating platform, a fastening component, a marking component and an image capture component. Referring to Fig. 12, Fig. 12 is a flowchart of a method for using a battery pack fastening system provided in an embodiment of the present disclosure. As shown in Fig. 12, the method includes step S11 to step S15 as follows:
step S11, which is a placing step of placing the battery pack to be fastened on the operating platform;
step S12, which is a fastening alignment step of causing the image capture component to obtain an image of the operating platform, using the image to form a visual guide for the movement of the fastening component, and moving the fastening component to a position docked with the fastener based on the visual guide;
step S13, which is a fastening step of causing the fastening component to fasten the fastener;
step S14, which is a marking alignment step of causing the image capture component to obtain an image of the operating platform, using the image to form a visual guide for the movement of the marking component, and moving the marking component to a position docked with the fastener based on the visual guide; and
step S15, which is a marking step of causing the marking component to mark the fastener.

It should be noted that when understanding the method for using a battery pack fastening system provided in the embodiments of the present disclosure, it can be understood with reference to the battery pack fastening system provided in the foregoing embodiments.

In addition, in the embodiments of the present disclosure, the battery pack fastening system can be arranged in the corresponding position of the production line according to the production sequence of the battery pack, which is not limited in the embodiments of the present disclosure. In addition, in the battery pack production line, one battery pack fastening system in the embodiments of the present disclosure may be arranged, or two or more battery pack fastening systems may be arranged, which is not limited in the embodiments of the present disclosure.

Here, in step S11, the battery pack may be transported to the operating platform by manual transportation, conveyor belt transportation, or AGV transportation, which is not limited in the embodiments of the present disclosure.

Illustratively, where the battery pack is transported in an AGV transportation manner, the control module of the battery pack fastening system may be used to obtain a signal indicating that the AGC reaches a designated position. On this basis, the control module can control the battery pack fastening system to fasten the fastener between the box and the upper cover of the battery pack according to a tightening task corresponding to the battery pack.

Specifically, in step S12, the image capture component is used to obtain an image of the operating platform, where the image includes position information of the fastener. The control module can analyze the image, and thus can determine the position of the fastener to be fastened. On this basis, the control module can form a visual guide for the movement of the fastening component according to the position of the fastener to be fastened, and thus can control the movement of the fastening component to a position where it docks with the fastener. In this position, the fastening component docks with the fastener, and the fastening component can fasten the fastener by applying torque to the fastener.

During this process, the image capture component may also be used to obtain the positions of the fastener and the fastening component in real time, such that the control module can form a dynamic visual guide for the position of the fastening component.

On this basis, in step S13, the fastening component may be used to fasten the fastener.

It should be noted that in some embodiments of the present disclosure, a driving member capable of driving the fastener to rotate may be provided inside the fastening component. During the process of fastening the fastener, the position of the main body structure of the fastening component does not change. In addition, for a battery pack fastening system provided with a driving assembly, the driving assembly may also be used to drive the fastener to rotate.

After the fastening of the fastener is completed, the fastener may be marked. It should be noted that it is possible here that all the fasteners are marked, or only a specific fastener is marked. For example, it is possible that a fastener is marked after fastening, or a fastener with an unqualified fastening result is marked.

Next, in step S14, the image capture component is used to obtain an image of the operating platform, where the image includes position information of the fastener to be marked. The control module can analyze the image, and thus can determine the position of the fastener to be marked. On this basis, the control module can form a visual guide for the movement of the marking component according to the position of the fastener to be marked, and thus can control the movement of the marking component to a position corresponding to the fastener to be marked. In this position, the marking component corresponds to the fastener to be marked.

In step S15, the fastener may be marked by the marking component.

Specifically, in step S 15, the fastener may be marked according to different marking methods of the marking component. Illustratively, when the marking component is configured in a manner similar to stamping a fastener, the marking component is used to complete the operation of stamping the fastener. In addition, when the marking component is configured in a manner similar to drawing a line with a marker, the marking component is used to complete the drawing of a marking line on the fastener.

In the method for using a battery pack fastening system provided in the embodiments of the present disclosure, the image obtained by the image capture component is used to provide a visual guide for the movement of the fastening component and the movement of the marking component. For different battery packs of different models and specifications, as well as fasteners at different positions of the battery pack, a good adaptation can be formed, so that the scope of application of the battery pack fastening system can be improved, which can be used in the production of battery packs of different models and specifications.

On this basis, in some embodiments of the present disclosure, the fastening component and the marking component are also arranged to be relatively fixed to each other, and the fastening component and the marking component are driven to move synchronously by the driving assembly.

Illustratively, referring to Fig. 11, the fastening component and the marking component may be mounted on the same connecting bracket, so that the fastening component and the marking component can be kept relatively fixed to each other.

In addition, referring to Fig. 1, in some embodiments of the present disclosure, the driving assembly may be configured as a six-axis robot. In addition, the driving assembly may be configured as other structures, which are not limited in the embodiments of the present disclosure. Reference may be made to the description of the driving assembly in the foregoing embodiments.

Correspondingly, moving the fastening component to a position docked with the fastener in step S12 includes: moving the driving assembly to drive the fastening component to move to a position docked with the fastener. Moving the marking component to a position docked with the fastener in step S14 includes: moving the driving assembly to drive the marking component to move to a position docked with the fastener.

Here, the image of the operating platform obtained by the image capture component may be used to form a visual guide for the movement of the driving assembly. Therefore, the control module can be used to control the movement of the driving assembly, so that the driving assembly can drive the fastening component to move to a position docked with the fastener, and the driving assembly can drive the marking component to move to a position docked with the fastener.

In this way, with the above arrangement, the fastening component and the marking component are arranged to be relatively fixed to each other, and the driving assembly is used to synchronously drive the movements of the fastening component and the marking component, so that the movements of the fastening assembly and the marking assembly can be simple and easy to implement.

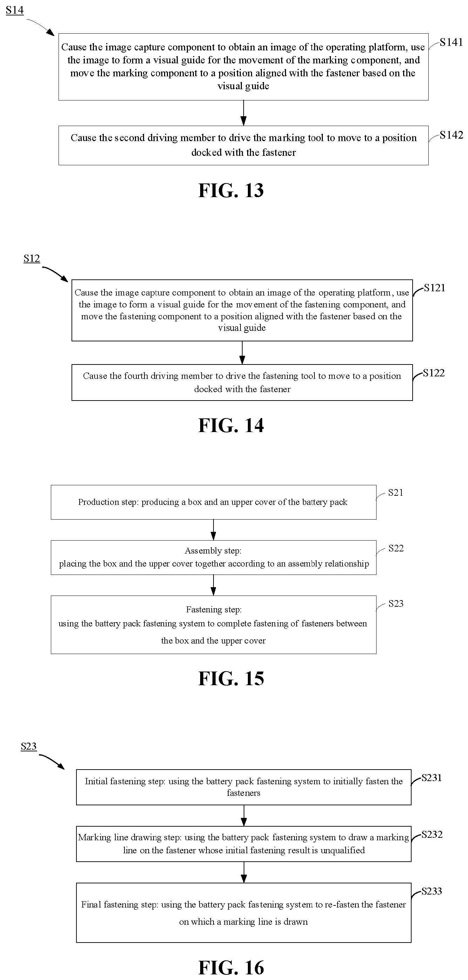

On this basis, in some embodiments of the present disclosure, the marking component includes a marking tool and a second driving member. The second driving member may drive the movement of the marking tool. Specifically, reference may be made to the description of the marking tool and the second driving member in the foregoing embodiments. Referring to Fig. 13, step S14 may be implemented through steps S141 to step S142.

In step S141, the image capture component is used to obtain an image of the operating platform, the image is used to form a visual guide for the movement of the marking component, and the marking component is moved to a position aligned with the fastener based on the visual guide.

In step S142, the second driving member is used to drive the marking tool to move to a position docked with the fastener.

Specifically, in step S141, the image capture component may be used to obtain an image of the operating platform, and the control module may be used to process the image to determine the position of the fastener. On this basis, the image may be used to form a visual guide for the movement of the marking component to control the driving assembly to drive the movement of the marking component, so that the marking component is moved to a position aligned with the fastener.

It should be noted that by the position to which the marking component is moved and in which it is aligned with the fastener here refers to the position where the projection of the marking tool on the fastener along a direction in which the second driving member drives the movement of the marking tool coincides with the fastener, and when the marking component is in the alignment position described above, the distance between the marking tool and the fastener is within a stroke range of the second driving member.

Next, in step S142, when the fastening component is in the position aligned with the fastener, the second driving member can drive the marking tool to dock with the fastener. In turn, the marking tool can complete the marking operation on the fastener.

In this way, with the above arrangement, the second driving member can have only one degree of freedom, and the movement of the driving assembly and the movement of the second driving member can be made as simple as possible, thereby making both the movement of the driving assembly and the movement of the second driving member easy to control.

In addition, in some embodiments of the present disclosure, the fastening component includes a fastening tool and a fourth driving member. The fourth driving member may drive the movement of the fastening tool. Specifically, reference may be made to the description of the fastening tool and the fourth driving member in the foregoing embodiments. Referring to Fig. 14, step S12 may be implemented through steps S121 to step S122.

In step S121, the image capture component is used to obtain an image of the operating platform, the image is used to form a visual guide for the movement of the fastening component, and the fastening component is moved to a position aligned with the fastener based on the visual guide.

In step S122, the fourth driving member is used to drive the fastening tool to move to a position docked with the fastener.

Specifically, in step S121, the image capture component may be used to obtain an image of the operating platform, and the control module may be used to process the image to determine the position of the fastener. On this basis, the image may be used to form a visual guide for the movement of the fastening component to control the driving assembly to drive the movement of the fastening component, so that the fastening component is moved to a position aligned with the fastener.

It should be noted that by the position to which the fastening component is moved and in which it is aligned with the fastener here refers to the position where the projection of the fastening component on the fastener along a direction in which the fourth driving member drives the movement of the fastening tool coincides with the fastener, and when the fastening component is in the alignment position described above, the distance between the fastening tool and the fastener is within a stroke range of the fourth driving member.

Next, in step S122, when the fastening component is in the position aligned with the fastener, the fourth driving member can drive the fastening tool to dock with the fastener. In turn, the fastening tool can complete the fastening operation on the fastener.

In this way, with the above arrangement, the fourth driving member can have only one degree of freedom, and the movement of the driving assembly and the movement of the fourth driving member can be made as simple as possible, thereby making both the movement of the driving assembly and the movement of the fourth driving member easy to control.

In additional, in some embodiments of the present disclosure, the marking tool includes a marking pen and a pen cap. The marking pen is detachably connected to the pen cap. Specifically, reference may be made to the description of the marking pen and pen cap in the foregoing embodiments. The battery pack fastening system further includes a clamping assembly. The clamping assembly can clamp or release the pen cap. Specifically, reference may be made to the description of the clamping assembly in the foregoing embodiments.

On this basis, before step S14, the method for using a battery pack fastening system in the embodiments of the present disclosure further includes:
a pen cap disengagement step of moving the marking component to the clamping assembly, causing the clamping assembly to clamp the pen cap, and causing the driving assembly to drive the marking pen to move away from the pen cap, so as to disengage the marking pen from the pen cap.

Specifically, before the pen cap disengagement step, the battery pack fastening system may be in an idle state or in a state of fastening the fastener. In these states, the pen cap is arranged on the marking pen. It is necessary to perform the above pen cap disengagement step before marking the fastener with the marking pen.

Further, in the pen cap disengagement step, the movement of the driving assembly can be controlled such that the driving assembly drives the marking component to move to the clamping assembly. Before this, the clamping assembly may be placed in a released state. For example, the clamping members of the clamping assembly may be placed in a state apart from each other. Thereafter, the pen cap can be controlled to move to between the clamping members, such that the clamping assembly clamps the pen cap. In this way, the clamping assembly fixes the pen cap, such that the pen cap does not move with the marking pen.

On this basis, the movement of the driving assembly can be controlled such that the driving assembly drives the marking pen to move away from the pen cap, to disengage the marking pen from the pen cap.

In this way, in the method for using a battery pack fastening system provided in the embodiments of the present disclosure, by providing the pen cap, the marking pen can be protected by the pen cap. Moreover, by providing the clamping component, the pen cap can be clamped by the clamping component, so as to facilitate the disengagement of the pen cap from the marking pen.

On this basis, where the marking tool includes a marking pen and a pen cap, and the battery pack fastening system includes a clamping component, the embodiments of the present disclosure also provide a method for using a battery pack fastening system, in which after step S15, the use further includes:
a pen cap engagement step of causing the driving assembly to drive the marking pen to move to the pen cap clamped by the clamping assembly, and causing the driving assembly to drive the marking pen to be inserted into the pen cap; and
a pen cap release step of causing the clamping assembly to release the pen cap.

Here, after the marking pen completes marking of the fastener, the control module controls the driving assembly to drive the marking to move to the pen cap clamped by the clamping assembly. Moreover, the control module can further control the movement of the driving assembly or the movement of the second driving member to drive the marking pen to be inserted into the pen cap.

Next, after the marking pen is inserted into the pen cap, the controller controls the clamping component to release the pen cap. In this way, the pen cap can move to other positions with the marking pen. For example, when the fastening component performs the next fastening operation, the pen cap is arranged on the marking pen and can move together with the fastening component. In this case, the pen cap protects the marking pen.

With the above arrangement, the state between the marking pen and the pen cap can be matched with the operation state of the battery pack fastening system. Where the function of the marking pen can be provided, the pen cap can be used to protect the marking pen when the marking pen is not performing the marking operation.

In addition, where an AGV is used to transport the tray and the battery pack, the operating platform in the embodiments of the present disclosure includes two lifting mechanisms arranged opposite to each other, and a blocking component is provided between the lifting mechanisms. Specifically, reference may be made to the description of the lifting mechanisms and blocking component in the foregoing embodiments.

On this basis, the embodiments of the present disclosure also provide a method for using a battery pack fastening system. In this method, step S11 may be implemented by the following steps:
a limiting step of causing the transport cart that transports the tray and the battery pack to move into a gap between the two lifting mechanisms, such that the blocking components limit the transport cart between the lifting mechanisms; and
a raising step of causing the lifting mechanisms to raise the tray and the battery pack.

Here, the AGV may travel according to an electromagnetic or optical guide apparatus. In this way, the AGC can carry the tray and the battery pack and travel to a gap between the two lifting mechanisms according to a predetermined route. Moreover, a sensor may be further provided on the lifting mechanism to monitor whether the AGC reaches a predetermined position between the two lifting mechanisms. For example, an optical sensor may be used to monitor the position of the AGV.

On this basis, after the AGV travels to the gap between the two lifting mechanisms, the control module may be used to control the movement of the blocking component such that the blocking component extends into the gap between the two lifting mechanisms. Therefore, the blocking component may be used to limit the AGV between the two lifting mechanisms.

Next, the control module may be used to control the movement of the lifting mechanisms such that the lifting mechanisms can raise the tray and the battery pack. In this way, the tray can be separated from the AGV, and the battery pack can be brought closer to the fastening component or the marking component to shorten the movement of the driving assembly.

Thereafter, the blocking component may release the limit on the AGV, and the AGV may move to other stations and perform other operations, such as transporting other trays or battery packs.

In addition, in some embodiments of the present disclosure, a locking component is further provided on the lifting mechanism, and the locking component can keep the tray fixed relative to the lifting mechanism. Specifically, reference may be made to the description of the locking component in the foregoing embodiments.

In view of this, the embodiments of the present disclosure also provide a method for using a battery pack fastening system, in which during the raising step, the method further includes:
a locking step of extending locking members of the locking components into locking holes of the tray.

Here, during raising of the tray by the lifting mechanisms, the control module may be used to control the locking components such that the locking members of the locking components extend into the locking holes of the tray. In this way, the locking components can be used to form a limit on the tray, to keep the tray and the lifting mechanism relatively fixed to each other, so as to prevent the tray from sliding during the raising of the tray.

It should be noted that in some embodiments of the present disclosure, the control module may be used to record the fastening results of fasteners fastened by the fastening component; and the marking component may be used to mark fasteners with unqualified fastening results. Furthermore, the fastening component may be used to re-fasten the fasteners marked by the marking components.

Here, a torque sensor, an angle sensor, etc. may be mounted in the fastening component to monitor the fastening results of the fasteners, so as to determine whether the torque applied to the fasteners is qualified. At the same time, the control module may be used to record the fastening results of the fasteners. On this basis, the marking component can be controlled to mark fastener with unqualified fastening results.

In this way, after the marking component marks the fasteners with unqualified fastening results, it can be intuitively determined which fasteners have unqualified fastening results to facilitate subsequent operation.

On this basis, in some embodiments of the present disclosure, the fastening component may also be used to re-fasten the fasteners marked by the marking component.

Here, based on the foregoing description, it can be known that the fasteners marked by the marking component are fasteners with unqualified fastening results. In this case, the image capture component may be used to determine the position of the mark applied by the marking component on the fastener. In this way, the control module can determine the position of the fastener with the mark by analyzing the image of the fastener obtained by the image capture component. On this basis, the control module can control the movement of the driving assembly to drive the fastening component to move to the position corresponding to the fastener, thereby completing the re-fastening of the fastener.

With the above arrangement, the battery pack fastening system in the embodiments of the present disclosure can be used to re-fasten the fasteners that fail the first fastening, so that the assembly quality of the battery pack can be ensured.

In additional, in some embodiments of the present disclosure, the fastening component may be used to pick up and mount the fastener. Specifically, a fastener placement assembly may be provided near the operating platform, and fasteners are placed on the fastener placement assembly for the fastening component to pick up. Furthermore, the fastening component may be used to pick up the fasteners; and the fastening component is used to place the fasteners in fastener mounting holes of the battery pack.

Here, the fastener placement assembly may be arranged at any position near the operating platform. In the embodiments of the present disclosure, there is no limit on the position where the fastener placement assembly is arranged near the operating platform, as long as the fastening component can pick up the fasteners on the fastener placement assembly.

In the embodiments of the present disclosure, the fastener placement assembly may automatically complete the loading of the fasteners for the fastening component to pick up. In addition, in the embodiments of the present disclosure, there is no limit to the way in which the fastening component picks up the fastener. Illustratively, the fastening component may pick up the fastener by any means such as magnetic attraction, grabbing or catching. On this basis, the control module may be used to control the movement of the driving assembly such that the fastening component places the fastener in the fastener mounting hole of the battery pack.

In this way, with the above arrangement, the degree of automation of the battery pack fastening system in the embodiments of the present disclosure can be further improved, making the battery pack fastening system in the embodiments of the present disclosure more intelligent.

In addition, in some embodiments of the present disclosure, the control module may be electrically coupled to a display assembly, the display assembly may be used to monitor the process of fastening the fastener by the fastening component, and the display assembly may be used to display the fastening result of the fastener.

Here, a display screen may be used to make the display assembly in the embodiments of the present disclosure. By electrically coupling the control module to the display screen, an interactive interface can be displayed on the display screen to facilitate control of the control module and the battery pack fastening system. Moreover, the display screen may also be used to display pictures corresponding to the fastening and marking processes of the fastener, so that the processes of fastening and marking the fastener by the battery pack fastening system can be better monitored.

In addition, the embodiments of the present disclosure also provide a battery pack production method, which is configured to fasten and mark fasteners between a box and an upper cover of a battery pack using a battery pack fastening system provided in the foregoing embodiments. Fig. 15 is flowchart of the implementation of a battery pack production method provided in an embodiment of the present disclosure. As shown in Fig. 15, the method includes steps S21 to step S23 as follows:
step S21, which is a production step of producing a box and an upper cover of the battery pack;
step S22, which is an assembly step of placing the box and the upper cover together according to an assembly relationship; and
step S23, which is a fastening step of using the battery pack fastening system to complete fastening of fasteners between the box and the upper cover.

Here, it is necessary to fasten the box and the upper cover of the battery pack together by means of the fasteners. In this regard, the box and the upper cover may be produced in advance according to the production procedures of the box and the upper cover.

On this basis, the box and the upper cover may be placed together according to an assembly relationship by means of a grabbing robot or manual operation. It should be noted that the assembly relationship between the box and the upper cover here can be considered as the relative positional relationship between the box and the upper cover after assembly is completed.

Finally, the battery pack fastening system provided in the foregoing embodiments may be used to complete the fastening of the fasteners between the box and the upper cover.

It should be noted that for fastening the fasteners between the box and the upper cover of the battery pack, the torque applied to the fasteners by the battery pack fastening system may be unqualified due to accidental factors. In view of this situation, the embodiments of the present application also provide a battery pack production method. Specifically, referring to Fig. 16, in this production method, step S23 described above may be implemented through steps S231 to step S233.

In step S231, an initial fastening step of using the battery pack fastening system to initially fasten the fasteners is perform.

In step S232, a marking line drawing step of using the battery pack fastening system to mark the fastener whose initial fastening result is unqualified is performed.

In step S233, a final fastening step of using the battery pack fastening system to re-fasten the marked fastener is performed.

Here, a torque sensor may be provided in the fastening component to detect the torque applied by the fastening component to the fastener, so that the torque applied by the fastening component to the fastener can be compared with a torque required by the fastener, and according to the comparison, the fastening result of the fastener can be determined after the initial fastening step is completed.

If after the initial fastening step is completed, there is a fastener having an unqualified result, then the marking component may be used to mark the fastener with an unqualified initial fastening result. In this way, fasteners with qualified initial fastening results can be distinguished from fasteners with unqualified initial fastening results.

Illustratively, with reference to the description of the foregoing embodiments, the marking component may include a marking pen, and the marking pen may be used to draw marking lines on the fasteners with unqualified initial fastening results.

On this basis, the marked fasteners can be re-fastened using the fastening component of the battery pack fastening system.

In this way, in the battery pack fastening method provided in the embodiments of the present disclosure, the battery pack fastening system is used to mark fasteners with unqualified initial fastening results, and the battery pack fastening system is used to re-fasten the fasteners with unqualified initial fastening results, so that the fastening quality of the battery pack can be improved, and the reliability of the battery pack can be improved.

In addition, the embodiments of the present disclosure also provide a battery pack production method, in which after the fastening step, the production method further includes:
recording final fastening results of the fasteners;
transporting the battery pack with all the fasteners having qualified final fastening results to the next production process station; and
transporting the battery pack with not all the fasteners having qualified final fastening results to a re-inspection station.

Here, the final fastening results of the fasteners refer to the fastening results after the battery pack fastening system completes all fastening operations on the battery pack. Illustratively, where the battery pack fastening system is used to re-fasten the fasteners marked by the marking component, the final fastening results of the fasteners refer to the final fastening results after the fasteners are re-fastened by the battery pack fastening system.

It should be noted that in the initial fastening step, when all the fasteners have qualified initial fastening results, the battery pack can be transported to the next production process station. Alternatively, in the initial fastening step, when a fastener has an unqualified fastening result, but after the final fastening step, all the fasteners have qualified fastening results, the battery pack can also be transported to the next production process station.

In contrast, during the initial fastening step, when a fastener has an unqualified fastening result, and after the final fastening step, the fastener still has an qualified fastening result, the battery pack is then transported to a re-inspection station for re-inspection or subjected to manual fastening.

The above embodiments are merely used for illustrating rather than limiting the technical solutions of the present disclosure. Although the present disclosure has been described in detail with reference to the above embodiments, those of ordinary skill in the art should understood that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present disclosure, which shall fall within the scope of the present disclosure. In particular, the technical features mentioned in the various embodiments can be combined in any manner as long as there is no structural conflict. The present disclosure is not limited to the specific embodiments disclosed herein, but rather includes all technical solutions falling within the scope of the present disclosure.

### Industrial applicability

In the battery pack fastening system provided in the embodiment of the present disclosure, the control module can process the image of the fastener obtained by the image capture component, and thus can determine the position of the fastener. On this basis, the control module can form a visual guide for the movement of the fastening assembly driven by the driving assembly, so that the control module can control the driving assembly to drive the fastening component to move to the position corresponding to the corresponding fastener, the fastening component can then be docked with the corresponding fastener, and the fastening component can thus be used to complete fastening of the corresponding fastener. Further, it is also possible for the control module to control the driving assembly to drive the marking component to move to a position corresponding to the corresponding fastener. On this basis, the marking component can be brought into contact with the corresponding fastener, and the marking component can thus be used to complete marking of the corresponding fastener. Moreover, in the embodiment of the present disclosure, the control module controls the movement of the driving assembly or the fastening assembly based on the visual guide formed by the image obtained by the image capture component for the movement of the driving assembly or the fastening assembly. For different battery packs of different models and specifications, as well as fasteners at different positions of the battery pack, a good adaptation can be formed. Therefore, the battery pack fastening system provided in the embodiment of the present disclosure can be applied to the production of battery packs of different models and specifications.

## Claims

1. A battery pack fastening system for fastening a fastener between a box and an upper cover of a battery pack, the battery pack fastening system comprising:
an operating platform, comprising a lifting mechanism and a tray, wherein the tray is placed on the lifting mechanism, the tray is provided with an accommodating portion in which the battery pack is placed, and an operating space is formed above the operating platform;
a fastening assembly, comprising a fastening component, a marking component and an image capture component, wherein the fastening component is configured to fasten the fastener, the marking component is configured to mark the fastener, and the image capture component is configured to obtain an image of the fastener;
a driving assembly, wherein the fastening assembly is mounted to a free end of the driving assembly, and the driving assembly is configured to drive the fastening assembly to move to any position within the operating space; and
a control module, wherein the driving assembly and the image capture component are both electrically coupled to the control module, and the control module is capable of forming a visual guide for the movement of the driving assembly based on the image, so as to move the fastening assembly to a position corresponding to the fastener to complete fastening and marking of the fastener.

2. The battery pack fastening system according to claim 1, wherein the fastening assembly comprises a connecting bracket fixedly connected to the free end of the driving assembly, the fastening component and the marking component are mounted in an arrangement manner on the connecting bracket, and the image capture component is mounted on the connecting bracket.

3. The battery pack fastening system according to claim 2, wherein there are at least two fastening components arranged in an arrangement manner on the connecting bracket, and there are at least two image capture components arranged on the connecting bracket in an arrangement manner of one-to-one correspondence with the fastening components.

4. The battery pack fastening system according to claim 3, wherein the fastening component comprises a fixed fastening component and a movable fastening component, there is one fixed fastening component fixedly connected to the connecting bracket, and the movable fastening component has an adjustable position relative to the connecting bracket; and the marking component is fixedly connected to the connecting bracket close to the fixed fastening component.

5. The battery pack fastening system according to claim 4, wherein the fastening assembly further comprises a first driving member arranged between the connecting bracket and the movable fastening component, and the first driving member is configured to drive the movable fastening component to move relative to the connecting bracket; and
the first driving member is electrically coupled to the control module, and the control module is capable of controlling the first driving member to drive the movement of the movable fastening component based on the image.

6. The battery pack fastening system according to claim 4 or 5, wherein the image capture component and the movable fastening component are respectively arranged on two sides of the fixed fastening component; and
the image capture component corresponding to the fixed fastening component is arranged between the marking component and the fixed fastening component.

7. The battery pack fastening system according to any one of claims 1 to 6, wherein the image capture component comprises a supplementary lighting member and an image capture member, an orientation of a light source of the supplementary lighting member is the same as an orientation of a lens of the image capture member, and the supplementary lighting member is configured to provide supplementary lighting to the fastener captured by the image capture member; and
the image capture member is electrically coupled to the control module, and the control module is configured to obtain and process the image captured by the image capture member.

8. The battery pack fastening system according to claim 7, wherein the supplementary lighting member is an annular light source arranged between the image capture member and the fastener, and the lens of the image capture member is located on an axis of the annular light source.

9. The battery pack fastening system according to any one of claims 2 to 8, wherein the marking component comprises a marking tool and a second driving member, the second driving member is arranged between the marking tool and the connecting bracket, and is configured to drive the marking tool to move relative to the connecting bracket; and
the second driving member is electrically coupled to the control module, and the control module is capable of controlling the second driving member to drive the movement of the marking tool based on the image.

10. The battery pack fastening system according to claim 9, wherein the marking tool comprises a marking pen and a pen cap, wherein the marking pen is provided with a marking portion at one end away from the driving assembly, the marking portion is configured to draw a marking line on the fastener, and the pen cap detachably covers the marking portion.

11. The battery pack fastening system according to claim 10, further comprising a clamping assembly, wherein the clamping assembly remains fixed relative to the operating platform; and the clamping assembly comprises at least two clamping members capable of moving closer to or away from each other to clamp or release the pen cap.

12. The battery pack fastening system according to claim 11, wherein the clamping assembly further comprises a third driving member configured to drive the clamping members to move closer to or away from each other;
the third driving member is electrically coupled to the control module, and when the marking pen needs to draw a marking line on the fastener, the control module controls the marking pen to drive the pen cap to move to between the clamping members, and controls the clamping members to clamp the pen cap so as to disengage the marking pen from the pen cap; and
when the marking pen completes the drawing of a marking line on the fastener, the control module controls the marking pen to be sleeved inside the pen cap, and controls the clamping members to release the pen cap.

13. The battery pack fastening system according to any one of claims 10 to 12, wherein a plurality of magnets are provided circumferentially on contacting surfaces of the pen cap and the marking pen, and the pen cap is magnetically connected to the marking pen by means of the magnets.

14. The battery pack fastening system according to any one of claims 11 to 13, wherein the clamping members are provided with guide slopes configured to guide the movement of the pen cap to between the clamping members.

15. The battery pack fastening system according to any one of claims 11 to 14, wherein the clamping assembly further comprises a pen cap detection sensor configured to detect whether the pen cap is located between the clamping members; and
the pen cap detection sensor is electrically coupled to the control module, and a prerequisite for the control module to control the marking pen to draw a marking line on the fastener comprises that the pen cap detection sensor detects that the marking pen is located between the clamping members.

16. The battery pack fastening system according to any one of claims 2 to 15, wherein the fastening component comprises a fastening tool and a fourth driving member, the fourth driving member is arranged between the fastening tool and the connecting bracket, and is configured to drive the fastening tool to move relative to the connecting bracket; and
the fourth driving member is electrically coupled to the control module, and the control module is capable of controlling the fourth driving member to drive the movement of the fastening tool based on the image.

17. The battery pack fastening system according to any one of claims 1 to 16, wherein the lifting mechanism comprises a base, a raising member and a fifth driving member, wherein the fifth driving member is arranged between the base and the raising member, and is configured to drive the raising member to move in a vertical direction, such that the raising member raises the tray; and
the fifth driving member is electrically coupled to the control module, and the control module is capable of controlling the fifth driving member to drive the movement of the raising member.

18. The battery pack fastening system according to claim 17, wherein there are two lifting mechanisms arranged opposite to each other, there is a gap between the lifting mechanisms, and the gap forms a transport path for the battery pack to be transported by a transport cart and the tray;
a blocking component is provided on the base, and comprises a blocking member and a sixth driving member, and the sixth driving member is configured to drive the blocking member to move to the transport path, so as to limit the transport cart between the lifting mechanisms; and
the sixth driving member is electrically coupled to the control module, and the control module is capable of controlling the blocking component to limit or release the limit on the transport cart.

19. The battery pack fastening system according to claim 17 or 18, wherein the lifting mechanism further comprises a locking component, the locking component comprises a locking member and a seventh driving member, and the seventh driving member is capable of driving the locking member to move in the vertical direction to extend into a locking hole provided in the tray, so as to lock the tray between the lifting mechanisms; and
the seventh driving member is electrically coupled to the control module, and the control module is capable of controlling the seventh driving member to drive the movement of the locking member.

20. A method for using a battery pack fastening system, the battery pack fastening system being configured to fasten a fastener between a box and an upper cover of a battery pack and comprising an operating platform, a fastening component, a marking component and an image capture component, the method comprising:
a placing step of placing the battery pack to be fastened on the operating platform;
a fastening alignment step of causing the image capture component to obtain an image of the operating platform, using the image to form a visual guide for the movement of the fastening component, and moving the fastening component to a position docked with the fastener based on the visual guide;
a fastening step of causing the fastening component to fasten the fastener;
a marking alignment step of causing the image capture component to obtain an image of the operating platform, using the image to form a visual guide for the movement of the marking component, and moving the marking component to a position docked with the fastener based on the visual guide; and
a marking step of causing the marking component to mark the fastener.

21. The method according to claim 20, wherein the fastening component is fixed relative to the marking component, and the fastening component and the marking component are driven to move synchronously by a driving assembly;
moving the fastening component to a position docked with the fastener in the fastening alignment step comprises:
moving the driving assembly to drive the fastening component to move to a position docked with the fastener; and
moving the marking component to a position docked with the fastener in the marking alignment step correspondingly comprises:
moving the driving assembly to drive the marking component to move to a position docked with the fastener.

22. The method according to claim 21, wherein the marking component comprises a marking tool and a second driving member; and
the marking alignment step comprises:
causing the image capture component to obtain an image of the operating platform, using the image to form a visual guide for the movement of the marking component, and moving the marking component to a position aligned with the fastener based on the visual guide; and
causing the second driving member to drive the marking tool to move to a position docked with the fastener.

23. The method according to claim 21 or 22, wherein the fastening component comprises a fastening tool and a fourth driving member; and
the fastening alignment step comprises:
causing the image capture component to obtain an image of the operating platform, using the image to form a visual guide for the movement of the fastening component, and moving the fastening component to a position aligned with the fastener based on the visual guide; and
causing the fourth driving member to drive the fastening tool to move to a position docked with the fastener.

24. The method according to claim 22 or 23, wherein the marking tool comprises a marking pen and a pen cap, and the battery pack fastening system further comprises a clamping assembly; and
before the marking alignment step, the method further comprises:
a pen cap disengagement step of moving the marking component to the clamping assembly, causing the clamping assembly to clamp the pen cap, and causing the driving assembly to drive the marking pen to move away from the pen cap, so as to disengage the marking pen from the pen cap.

25. The method according to claim 24, wherein after the marking step, the method further comprises:
a pen cap engagement step of causing the driving assembly to drive the marking pen to move to the pen cap clamped by the clamping assembly, and causing the driving assembly to drive the marking pen to be inserted into the pen cap; and
a pen cap release step of causing the clamping assembly to release the pen cap.

26. The method according to any one of claims 20 to 25, wherein a transport cart is used to transport a tray and the battery pack, the operating platform comprises two lifting mechanisms arranged opposite to each other, and blocking components are provided in the lifting mechanisms; and
the placing step comprises:
a limiting step of causing the transport cart that transports the tray and the battery pack to move into a gap between the two lifting mechanisms, such that the blocking components limit the transport cart between the lifting mechanisms; and
a raising step of causing the lifting mechanisms to raise the tray and the battery pack.

27. The method according to claim 26, wherein locking components are provided in the lifting mechanisms, and before the raising step, the method further comprises:
a locking step of extending locking members of the locking components into locking holes of the tray.

28. A battery pack production method, in which a battery pack fastening system is used for the production of a battery pack, the battery pack fastening system comprising an operating platform, a fastening component, a marking component and an image capture component, the production method comprising:
a production step of producing a box and an upper cover of the battery pack;
an assembly step of placing the box and the upper cover together according to an assembly relationship; and
a fastening step of using the battery pack fastening system to complete fastening of fasteners between the box and the upper cover.

29. The production method according to claim 28, wherein the fastening step comprises:
an initial fastening step of using the battery pack fastening system to initially fasten the fasteners; and
where there is a fastener whose initial fastening result is unqualified in the initial fastening step, the fastening step further comprises:
a marking line drawing step of using the battery pack fastening system to draw a marking line on the fastener whose initial fastening result is unqualified; and
a final fastening step of using the battery pack fastening system to re-fasten the fastener on which a marking line is drawn.

30. The production method according to claim 28 or 29, wherein after the fastening step, the production method further comprises:
recording final fastening results of the fasteners;
transporting the battery pack with all the fasteners having qualified fastening results to the next production process station; and
transporting the battery pack with not all the fasteners having qualified fastening results to a re-inspection station.
